# EUROPEAN PATENT SPECIFICATION

(11) **EP 1 001 160 B1**
(45) Date of publication and mention of the grant of the patent: **14.05.2003**
(21) Application number: 99122787.7
(22) Date of filing: 16.11.1999
(51) Int. Cl.: F02M 35/16

(54) **Internal combustion engine**
Brennkraftmaschine
Moteur à combustion

(30) Priority: 16.11.1998 JP 32430198; 20.11.1998 JP 33008698; 20.11.1998 JP 33008798
(43) Date of publication of application: 17.05.2000
(73) Proprietor: SANSHIN KOGYO KABUSHIKI KAISHA, Hamamatsu-shi Shizuoka-ken (JP)
(72) Inventor: Kashima, Yukinori, Hamamatsu-shi, Shizuokaken (JP)
(74) Representative: Grünecker, Kinkeldey, Stockmair & Schwanhäusser Anwaltssozietät

(56) References cited:
- EP-A- 0 423 813
- EP-A- 0 455 234
- US-A- 5 101 792
- US-A- 5 207 190
- US-A- 5 489 227
- US-A- 5 505 166

## Description

This invention relates to an internal combustion engine according to the preamble of the independent claim 1.

An internal combustion engine as indicated above is known from US-A-5,505,166.

In conventional engines, the intake passage is disposed between the intake port of the combustion chamber and a surge tank, with a throttle body disposed in the air inflow area of the surge tank. The air flow rate into the surge tank is regulated with the throttle body, and the air is supplied from the surge tank to the combustion chamber through the intake passage. The injector for injecting fuel into the air in the intake passage is disposed near the intake port of the combustion chamber.

The pressure within the surge tank and the intake passage is negative. Accordingly, high accuracy and narrow tolerance are required for assembly work of the surge tank or the intake passage, resulting in the increase of labor cost and time for manufacture. If external air flows into the surge tank and the intake passage, then the air volume adjusted with the throttle body is necessarily varied to cause the engine output to be unstable.

In addition, the injector and the throttle body need to be assembled separately and the man-days required for the assembly line increases.

It may be the case that the engine is cooled with water drawn in from its lower part or first end, air is supplied through intake passages to combustion chambers of the engine, and injectors inject fuel to the air in the intake passages.

The cooling water drawn in from the lower part of the outboard motor flows up in a meandering way. Therefore, the temperature of the engine is lower in the lower part of the engine than in the upper part, the fuel injected from the injector into an intake passage located on a higher level is evaporated more easily, diffused better by air, and produces higher combustion efficiency in comparison with an intake passage located on a lower level. As a result, a cylinder located on an upper level tends to produce a greater output in comparison with a cylinder located on a lower level, and outputs of the cylinders may differ greatly from cylinder to cylinder. Essentially, the same applies for in-line cylinder engines, when water is drawn in from one end.

It is an objective of the present invention to improve an internal combustion engine as indicated above so as to reliably ensure always a stable engine output.

According to the present invention, this objective is solved by an internal combustion engine according to independent claim 1.

According to a preferred embodiment, the injector nozzle communicates with the intake passage downstream of a throttle valve mounted within the throttle body.

According to another preferred embodiment, the injector nozzle communicates with the intake passage upstream of a throttle valve mounted within the throttle body and fuel is injected from the injector toward a gap formed between the inner surface of the throttle body and the throttle valve.

According to a further preferred embodiment, the silencer and the intake pipe are made of plastic material.

According to a further preferred embodiment, a crankshaft is disposed upright and valve shafts of the throttle valves in the throttle bodies are disposed upright.

Incidentally in this embodiment, the side on which the cylinders are disposed is referred to as the "rear side" relative to the crankshaft.

Moreover, in conventional engines, the intake passage may be arranged so as to extend from the intake port of a combustion chamber to the outside of the engine and farther toward a silencer.

At the end of the intake passage on the combustion chamber side, an injector is mounted to be overhung toward the outside.

Such injection having an overhang toward the outside requires relatively large space for installing an engine. If such an engine is applied to an outboard motor, the lateral width of the to be wide and the volume of the cowling becomes larger. Particularly, when two outboard motors are mounted in parallel relation, the distance between two cowlings must be enough to avoid interference during string operation. Accordingly, the space for installing, outboard motors farther increases.

In order to reduce the overhang of injector to the utmost and according to a further preferred embodiment, the part of the intake passage on the combustion chamber side extends from the intake port to the outside where an overhung passage portion is formed, and further extends curvedly therefrom toward the inside where an recessed passage portion is formed, the injector, the injection nozzle of which is connected with the recessed passage portion, is arranged generally along the outer wall of a crankcase and the injection nozzle is directed toward the location of the combustion chamber.

According to a further preferred embodiment, a slope of part of the intake passage on the downstream side of the throttle body is steeper for the intake passage located on the first end than on the second end.

According to a further preferred embodiment, a pair of intake ports is provided for each cylinder.

According to a further preferred embodiment, a plural number of cylinders diverging right and left generally in a V-shape are disposed in a vertical tier, with one cylinder over another, a throttle body is attached to an intermediate position on the intake passage, an injector for injecting fuel is attached to the throttle body, valve shafts of the throttle valves of the throttle bodies are disposed upright, with the valve shaft of the uppermost throttle valve projecting above an engine case, top ends of the right and left throttle valve shafts are interconnected for interlocked movement through an interlocking mechanism disposed above the engine case.

Incidentally in this embodiment, the side on which the cylinders are disposed is referred to as the "rear side" relative to the crankshaft.

Other preferred embodiments of the present invention are laid down in further dependent claims.

In the following, the present invention is explained in greater detail with respect to several embodiments thereof in conjunction with the accompanying drawings, wherein:
FIG. 1 is a cross-sectional side view of an outboard motor on which an engine of the invention is mounted;
FIG. 2 shows an essential part of FIG. 1 in an enlarged scale;
FIG. 3 is a cross-sectional plan view of an engine of the first embodiment;
FIG. 4 is a plan view of the engine of the first embodiment;
FIG. 5 shows throttle valve actuating mechanisms; (a) as a first embodiment and (b) as a modified embodiment;
FIG. 6 is a cross-sectional plan view of an engine of the second embodiment;
FIG. 7 is a cross-sectional plan view of an engine of the third embodiment;
FIG. 8 is a cross-sectional plan view of an engine of the fourth embodiment;
FIG. 9 is a cross-sectional side view of an outboard motor on which an engine of this invention is installed.
FIG. 10 is a cross-sectional plan view of a fifth embodiment.
FIG. 11 is a cross-sectional plan view of a sixth embodiment.
FIG. 12 is a cross-sectional side view of an outboard motor of the invention.
FIG. 13 shows an essential part of FIG. 1 in an enlarged scale.
FIG. 14 is a cross-sectional plan view of the upper part of the outboard motor as the seventh embodiment.
FIG. 15 is an internal plan view of the outboard motor as the seventh embodiment.
FIG. 16 schematically shows the flow of cooling water.
FIG. 17 is an enlarged view of an essential part of intake passages.
FIG. 18 shows throttle valve operating mechanisms; (a) as a seventh embodiment and (b) as a modified embodiment.
FIG. 19 is a cross-sectional plan view of the upper part of the outboard motor as the eighth embodiment.
FIG. 20 is a cross-sectional plan view of the upper part of the outboard motor as the ninth embodiment.
FIG. 21 is a cross-sectional plan view of the upper part of the outboard motor as the tenth embodiment.

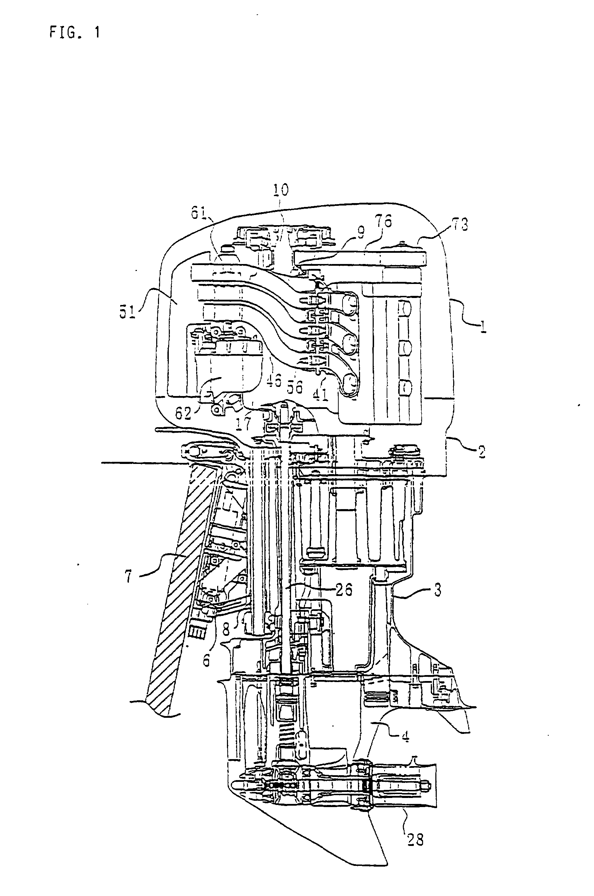

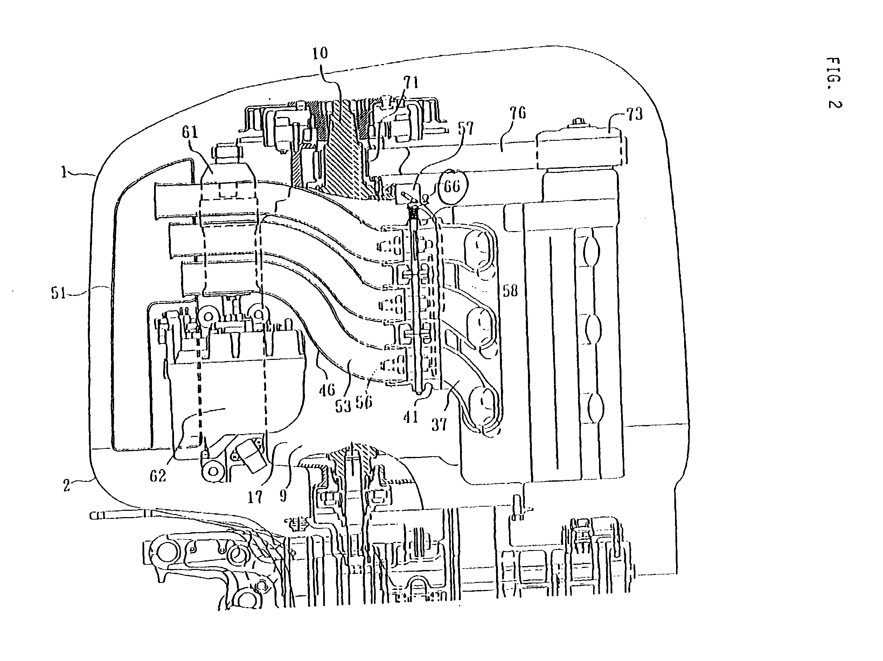

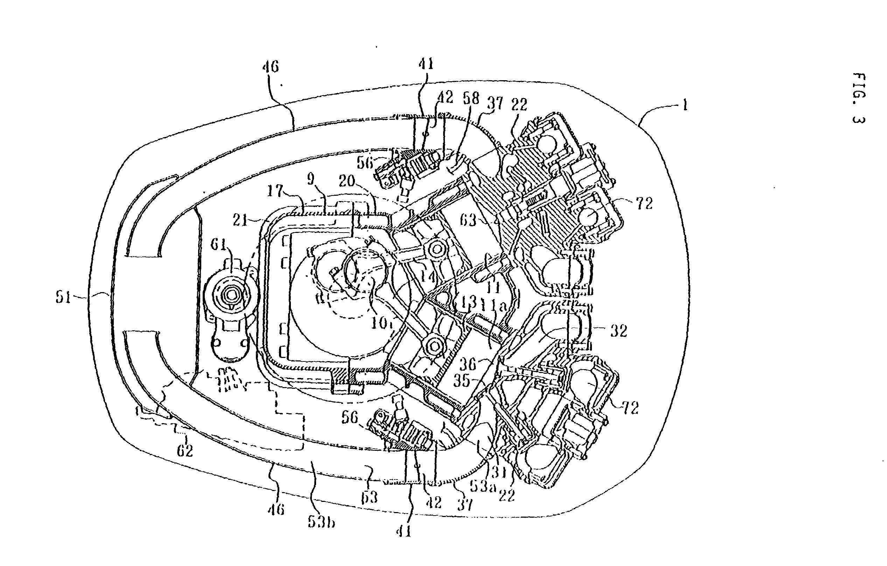

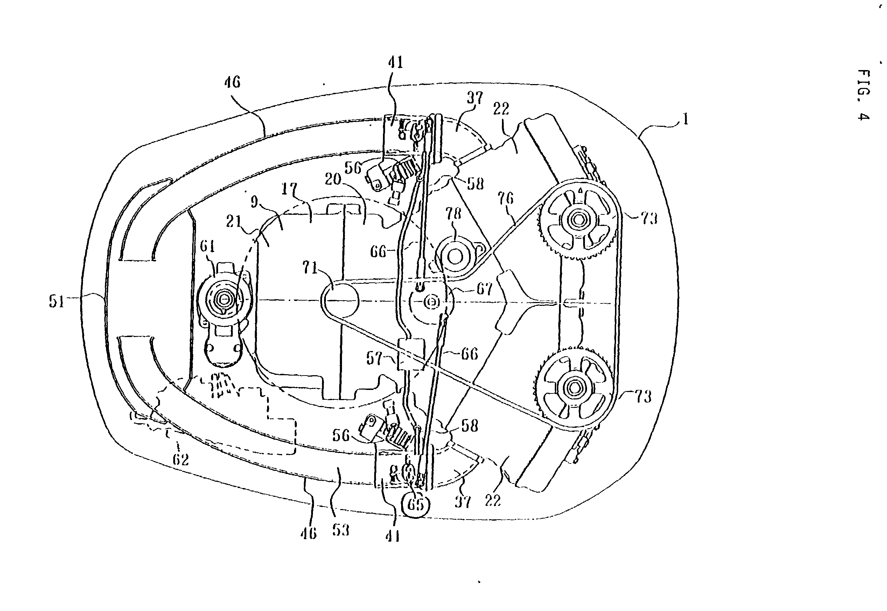

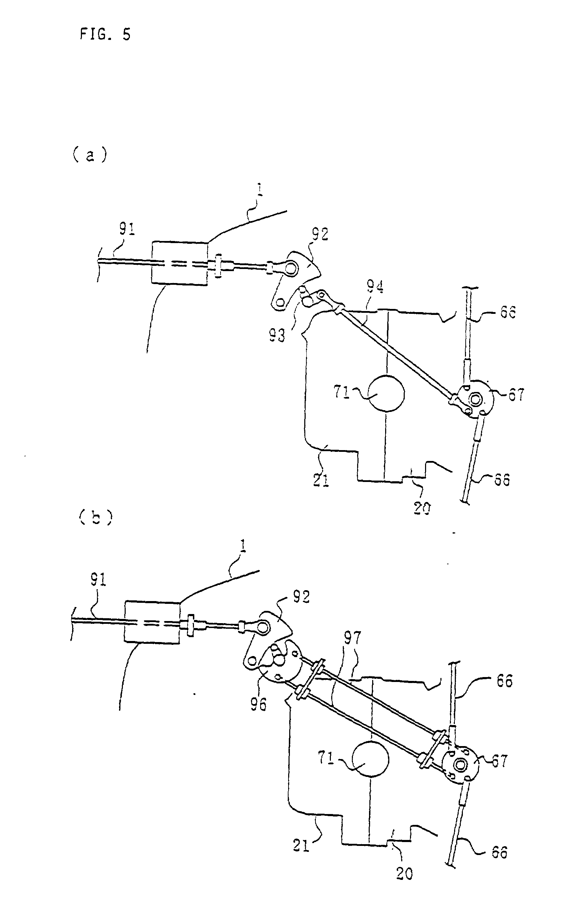

Now, referring to FIG. 1 to 4, a first embodiment of an engine of the invention will be described. FIG. 1 is a cross-sectional side view of an outboard motor on which an engine of the invention is mounted. FIG. 2 shows an essential part of FIG. 1 in an enlarged scale. FIG. 3 is a cross-sectional plan view of an engine of the first embodiment. FIG. 4 is a plan view of the engine of the first embodiment. FIG. 5 is a plan view, showing a mechanism for actuating a throttle valve; (a) as a first embodiment and (b) as a modified embodiment. Incidentally, FIGs. 1 and 2 are shown in side views partially cut out. In FIGs. 3 and 4, the vapor separator tank is shown with broken lines. The throttle valve actuating mechanism is not shown in FIG. 4.

The outboard motor is covered with a housing comprising, in the order from top downward, an upper cowling 1, a lower cowling 2, an upper casing 3, and a lower casing 4. A bracket 6 for attaching the outboard motor to a small vessel is mounted on the transom 7 of the small vessel. The main unit of the outboard motor is rotatably attached behind the attachment bracket 6 through a pivot shaft 8.

A fuel injection, V-type, six-cylinder, four-cycle engine 9 is disposed inside a cowling set comprising the upper and lower cowlings 1 and 2. The crankshaft 10 of the four-cycle engine 9 is disposed nearly upright. Paired, right and left cylinders 11 diverging in a V-shape are disposed behind the crankshaft 10. The paired, right and left cylinders 11, six in all, are arranged on three levels, one over another. Six pistons 13 are connected through connecting rods 14 to the crankshaft 10. The pistons 13 are slidably disposed respectively within the cylinders 11. A case 17 of the engine 9 comprises the cylinder block 20 defining the six cylinders 11, a crankcase 21 covering the cylinder block 20 from the crankshaft 10 side, and paired, right and left cylinder heads 22 covering and closing the cylinder block 20 from the combustion chamber 11 a sides.

The bottom end of the crankshaft 10 extends to project out of the engine case 17 and is connected to a drive shaft 26 disposed within the upper casing 3. Rotation of the drive shaft 26 is transmitted through bevel gears or the like to a propeller 28 rotatably disposed in the rear end area of the lower casing 4.

The cylinder head 22 is formed, for each cylinder 11, with an intake passage 31 having an end communicating with an intake port of the combustion chamber 11 a for supplying air to the cylinder 11 and with an exhaust passage 32 having an end communicating with an exhaust port of the combustion chamber 11 a for discharging combustion gas out of the cylinder 11. The intake ports for the combustion chamber 11a are opened and closed with intake valves 35, and the exhaust ports for the combustion chamber 11 a are opened and closed with exhaust valves 36.

A throttle body 41 is connected through an intake manifold 37 to the end of each intake passage 31 of the cylinder head 22. The throttle body 41 is provided with a throttle valve 42 with its valve shaft directed upright to regulate air flow rate through the throttle body 41. To the throttle body 41 is connected an end of a plastic-made intake pipe 46. The intake pipe 46 extends from the throttle body 41 forward and its fore-end is connected to a silencer 51 made of a plastic material and disposed inside the front area of the cowlings 1,2. The intake pipes 46 are disposed on right and left sides, three for each side, one over another. The plastic-made intake pipe 46 and silencer 51 are joined together by welding, fitting, or with an adhesive before being attached to the main unit of the engine 9.

An intake passage 53 extending from the silencer 51 to the intake port of the combustion chamber 11a is constituted with the above-described components; intake passage 31 of the cylinder head 22, intake manifold 37, throttle body 41, and intake pipe 46. The intake passage 53 comprises an outward-extending passage portion 53a extending from the intake port of the combustion chamber 11a once toward the outside in plan view (as seen from the fore-end side of the crankshaft 10) and then continues to a connecting passage portion 53b extending toward the silencer 51, with the fore-end of the connecting passage portion 53b connected to the silencer 51. The outward-extending passage portion 53a comprises the intake passage 31 and the intake manifold 37 of the cylinder head 22. The connecting passage portion 53b is constituted with the throttle body 41 and the intake pipe 46.

The throttle body 41 is provided with an electronically controlled injector 56 for each intake passage 53. The injector 56 is disposed between the engine case 17 and the intake passage 53 with its nozzle opening communicating with the intake passage 53. Fuel such as gasoline is supplied from the injector 56 to the air in the intake passage 53. An idling speed controller (ISC) 57 as an intake system component for controlling the air flow rate for reducing fluctuation in revolution at idling speeds is also disposed on the top side of the engine case 17. An air supply passage 58 from the ISC 57 is connected to each throttle body 41. The reference numeral 61 denotes a starter motor, 62 a vapor separator tank, and 63 an ignition plug.

The throttle bodies 41 are disposed on the right and left of the engine case 17, three for each side, one over another. The valve shafts of the throttle valves 42 of the throttle bodies 41 disposed one over another are interconnected for interlocked movement. The top end of the valve shaft of the topmost throttle valve 42 projects above the engine case 17 and is connected to a turning plate 67 through a link 66, etc. The turning plate 67 is rotatably attached to the top of the engine case 17. When a throttle lever (not shown) is operated, as shown in FIG. 5 (a), the turning plate 67 is turned through a driving including a throttle cable 91, a cam lever 92, an L-shaped sliding lever 93, and a rod 94. The turn of the turning plate 67 is transmitted through right and left links 66 to levers 65 secured to the valve shafts of the right and left throttle valves 42. In this way, when the valve shafts of the throttle valves 42 turn, the airflow rates through the throttle bodies 41 are regulated.

FIG. 5 (b) shows a modified example of the actuating mechanism. In this example, when the throttle lever is operated, the turning plate 67 is turned through the throttle cable 91, the cam lever 92, a slide lever 96, and a pair of cables 97, etc.

A pulley 71 for driving the camshaft is disposed at the top end of the crankshaft 10, and driven pulleys 73 are disposed at the top end of the camshaft 72 for driving the exhaust valve 36. A belt 76 is routed around the camshaft driving pulley 71 and the driven pulleys 73. A tensioner 78 is provided to apply tension to the belt 76. The above-described links 66 as components of the throttle interlocking mechanism for driving the valve shafts of the throttles 42 are disposed in the space between the engine case 17 and the belt 76.

With the outboard motor constituted as described above, when the crankshaft 10 rotates, air in the cowlings 1, 2 is drawn into the silencer 51 and flows through the intake pipes 46, the throttle bodies 41, the intake manifold 37, and the intake passages 31 in the cylinder head 22 into the combustion chambers 11a of the cylinders 11. In each throttle body 41, fuel such as gasoline injected from the injector 56 is mixed into the air flowing through the throttle body 41, the intake manifold 37 and the intake passages 31. The fuel mixture flowing into the combustion chambers 11a is ignited with the ignition plug 63 and burned. The gas produced by burning is exhausted through the exhaust passage 32 in the cylinder head 22 and casing 3, 4 out of the boss of the propeller 28. By the expansion force produced by burning of the fuel mixture, the piston 13 is reciprocated to rotate the crankshaft 10 through the connecting rod 14.

In the first embodiment described above, the throttle body 41 is disposed at the intermediate portion of the intake passage 53. At the front side, or the upstream of the throttle body 41 are attached the plastic-made intake pipe 46 and the silencer 51. As the throttle body 41 having ability to adjust air flow rate is arranged downstream of the intake pipe 46 and the silencer 51, the air flow rate at the downstream of the throttle body 41 would not be fluctuated to the atmost even if external air flows into the intake pipe 46 or the silencer 51 through the interconnection with the intake pipe 46 or the silencer 51. Accordingly, the tolerance for assembling the intake pipe 46 or the silencer 51 can be reduced to facilitate assembly and machining works.

The intake pipe 46 and the silencer 51 are assembled together before being attached to the engine main unit. Therefore, the intake pipe 46 and the silencer 51 are handled as a single unit to facilitate the attachment work.

Also, since the injector 56 is attached to the throttle body 41, they are handled as a single unit to shorten the time taken to assemble the engine 9. As a result, the number of steps in assembling the engine 9 is reduced.

Since the ISC 57 is disposed on the top of the engine case 17 to supply air to the throttle bodies 41 on the right and left through an air supply passage 58, air can be supplied to a plural number of throttle bodies 41 with the single ISC 57.

Since the valve shafts of the throttle valves 42 of the throttle bodies 41 are disposed in the vertical direction and the valve shafts of the right and left topmost throttle bodies 41 are made to interlock each other through an interlocking mechanism (including the turning plate 67 and the links 66), the interlocking mechanism does not extend beyond the lateral side of the engine 9 and so the width of the cowlings 1,2 is reduced.

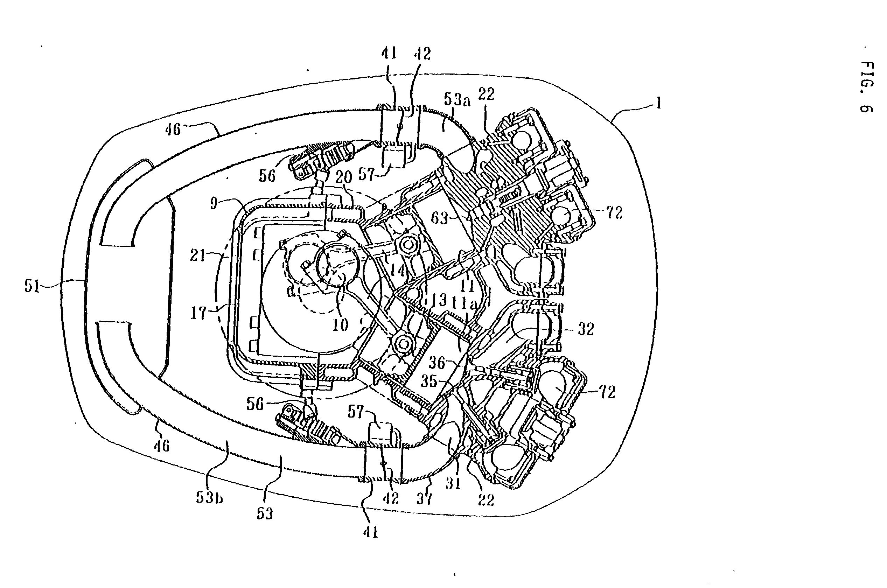

Now a second embodiment of the engine of the invention will be described. FIG. 6 is a cross-sectional plan view of the engine 9 of the second embodiment. In the description of this second embodiment, components that correspond to those in the first embodiment are provided with the same symbols and their detailed description is omitted.

FIG. 6 is a counterpart of FIG. 3 of the first embodiment, and the injector 56 is attached not to the throttle body 41 but to the intake pipe 46. While the nozzle opening of the injector 56 of the first embodiment is communicated with the intake passage 53 on the downstream side of the throttle valve 42, in this second embodiment, it is communicated on the upstream side of the throttle valve 42 so that the injector 56 injects fuel toward a gap between the inside surface of the throttle body 41 and the throttle valve 42. Since air flow is fast in the gap between the inside surface of the throttle body 41 and the throttle valve 42, fuel injected from the injector 56 can be sprayed efficiently. Also, since the injecting direction with the injector 56 is not directed upward, there is no possibility of fuel collecting near the nozzle opening of the injector 56.

The ISC 57 is attached to each throttle body 41. Since the injector 56 is attached to the intake pipe 46, the injector 56 and the intake pipe 46 can be made into a single unit. Therefore, the injector 56 and the intake pipe 46 can be attached as a single unit, so that the time required for the assembly work for the engine 9 is shortened.

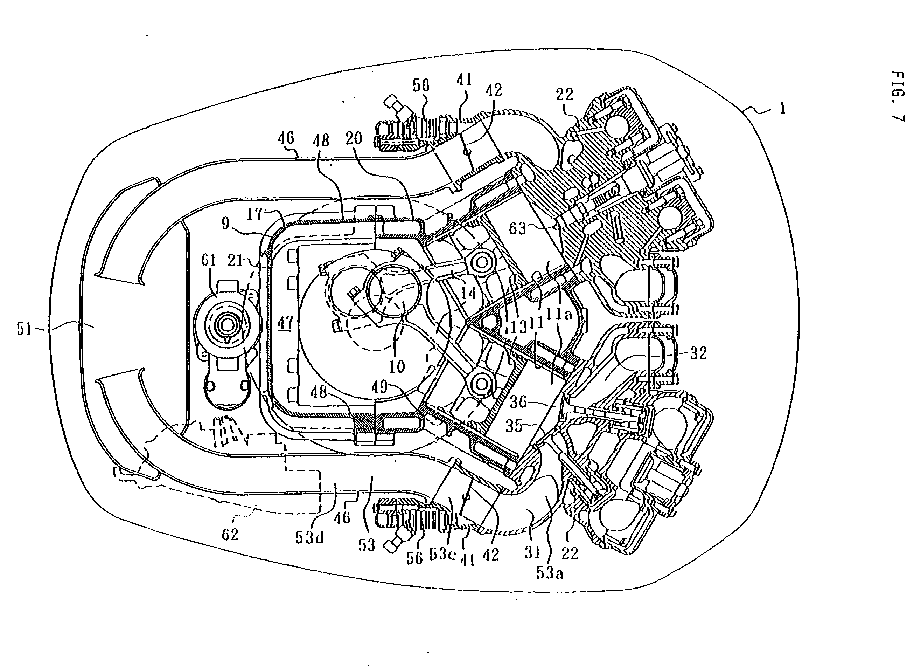

Next, a third embodiment of the engine of the invention will be described. FIG. 7 is a cross-sectional plan view of the engine of the third embodiment. In the description of this third embodiment, components that correspond to those in the first embodiment are provided with the same symbols and their detailed description is omitted. In FIG. 7, the vapor separator tank 62 is shown with broken lines.

FIG. 7 is a counterpart of FIG. 3 of the first embodiment, and the intake manifold (shown in FIG. 3 as a separate part 37) is formed integrally with the cylinder head 22. The intake passage 53 comprises an outward-extending passage portion 53a extending from the intake port of the combustion chamber 11a once toward the outside in plan view (as seen from the fore-end side of the crankshaft 10) and then continues to a draw-in passage portion 53c curved to extend inward and to a side passage portion 53d extending to the silencer 51. The outward-extending passage portion 53a comprises the intake passage 31 of the cylinder head 22. The draw-in passage portion 53c comprises the throttle body 41 and is sloped so as to be located more outside as it extends rearward approximately along the wall 49 of the cylinder 11. The side passage portion 53d comprises the intake passage 46 extending approximately along the outside wall 48 (namely approximately in front-rear direction) of the crank chamber 47.

The injector 56 is attached to the throttle body 41 with the axis of the injector 56 directed in the fore-and-aft direction (namely approximately parallel to the outside wall 48 of the crank chamber 47), and the injector 56 does not extend outward. Therefore, the width of the cowlings 1,2 is reduced.

Since the injector 56 is disposed outer than the intake passage 53, replacement and maintenance work can be made easily.

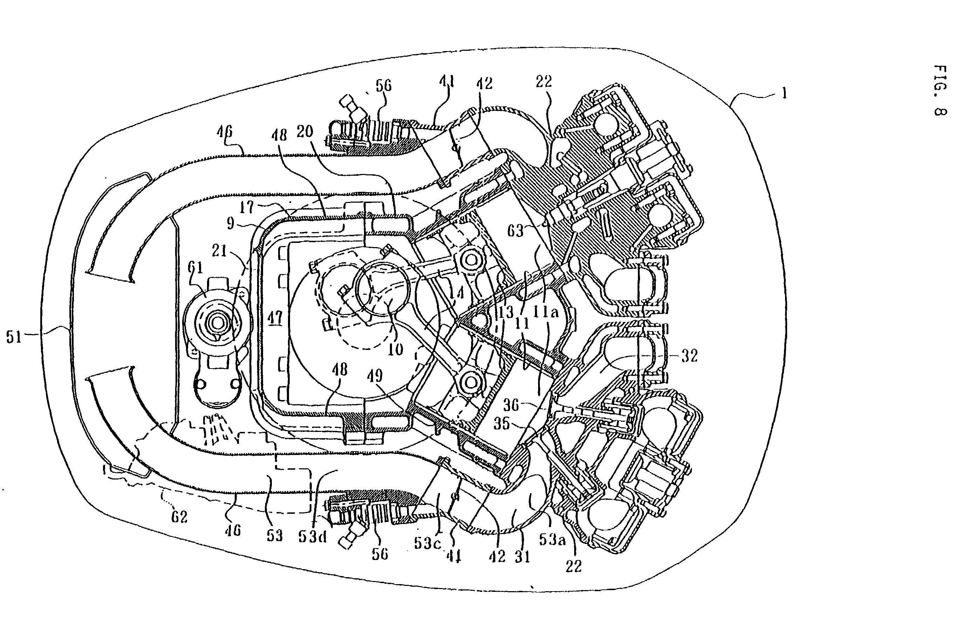

Next, a fourth embodiment of the engine of the invention will be described. FIG. 8 is a cross-sectional plan view of the engine 9 of the fourth embodiment. In the description of this fourth embodiment, components that correspond to those in the first embodiment are provided with the same symbols and their detailed description is omitted. In FIG. 8, the vapor separator tank 62 is shown with broken lines.

FIG. 8 is a counterpart of FIG. 7 of the third embodiment, and the injector 56 is attached not to the throttle body 41 but to the intake pipe 46. While the nozzle opening of the injector 56 of the third embodiment is communicated with the intake passage 53 on the downstream side of the throttle valve 42, in this fourth embodiment, it is communicated on the upstream side of the throttle valve 42 so that the injector 56 injects fuel toward the gap between the inside surface of the throttle body 41 and the throttle valve 42. Since air flow is fast in the gap between the inside surface of the throttle body 41 and the throttle valve 42, fuel injected from the injector 56 can be sprayed efficiently. Also, since the injecting direction of the injector 56 is not directed upward, there is no possibility of fuel collecting near the nozzle opening of the injector 56.

Incidentally, the same description as in the first embodiment about the reaching time from the nozzle opening of the injector 56 to the intake port 33 and about the swirl is generally applicable also to this embodiment.

While embodiments of the present invention are described above in detail, the invention is not limited to those embodiments but may be modified in various ways within the scope of gist of the invention as stipulated in the claims. Examples of modifications are indicated below.
(1) While the engine 9 in the above embodiments is of a V- type, six-cylinder, four-cycle engine, the type and the number of cylinders may be changed appropriately. For example, the engine can be an L -type engine. This engine is suitable for use in an outboard motor, while can be applied to other uses.
(2) Layout relation between right and left sides may be interchanged.
(3) The material for the silencer 51 and the intake pipe 46 need not necessarily be plastic but may be die-cast aluminum.
(4) It is also possible that the driving mechanism is directly connected to the valve shaft of one of right and left throttle valves 42 to transmit the driving force from the throttle cable 91 to the valve shaft of the right or left throttle valve 42, and through the interlocking mechanisms 66, 67 to the valve shaft of the other throttle valve 42.

According to this description, the throttle body is disposed at the intermediate portion of the intake passage. The intake passage and the silencer are arranged upstream of the throttle body. Thus, even if any external air flows into the intake passage and the silencer through the connection of the intake passage with the silencer, air flow rate regulated with the throttle body would not be affected to fluctuate. This allows the tolerance for assembly work to be wide. It is, therefore, facilitated to machine parts and assembly. In addition, as the injector is mounted on the throttle body or the intake passage, the injector and the throttle body can be made into a single unit to facilitate the assembly work of the engine.

In case the injector nozzle communicates with the intake passage downstream of a throttle valve mounted within the throttle body, fuel is injected, covering the almost of the air flowing in the intake passage.

There is also a case in which the injector nozzle communicates with the intake passage upstream of a throttle valve mounted within the throttle body and fuel is injected from the injector toward a gap formed between the inner surface of the throttle body and the throttle valve the fuel from the injector can be strongly sprayed since the velocity of the flow is relatively high.

And, in case the silencer and the intake passage are made of plastic material, their weights can be reduced. Further, the throttle body is disposed at the intermediate portion of the intake passage, as described above, in addition that tolerances for assembling the silencer with the intake passage can be wide, thereby the assembly work of the silencer and the intake passage with the engine body can be facilitated.

In case a crankshaft is disposed upright and valve shafts of the throttle valves in the throttle bodies are disposed upright, the overhung of the throttle valve shafts can be reduced and the engine can be designed in compact in the transverse direction. In the application of such an engine to an outboard motor the width of the cowling can be reduced. As a result, the space for installing an outboard motor on a small vessel can be diminished.

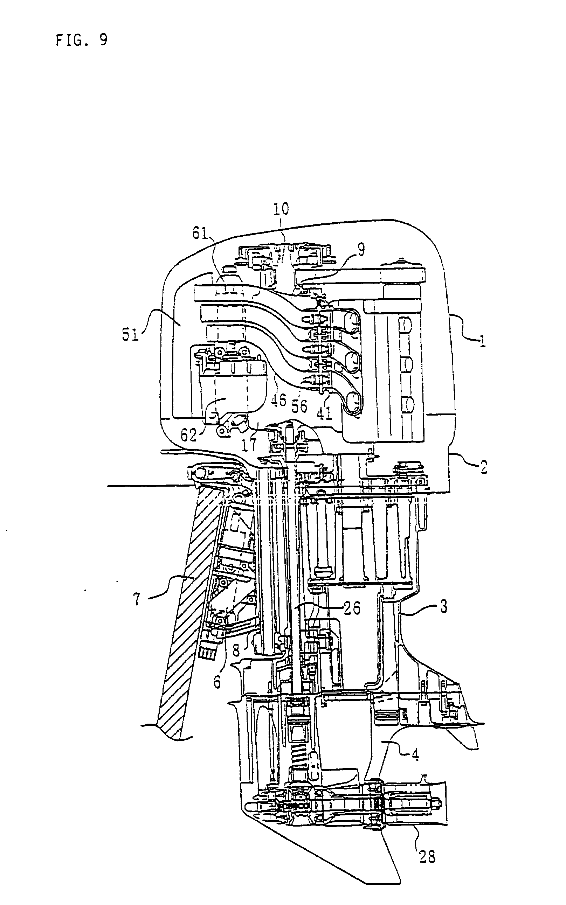

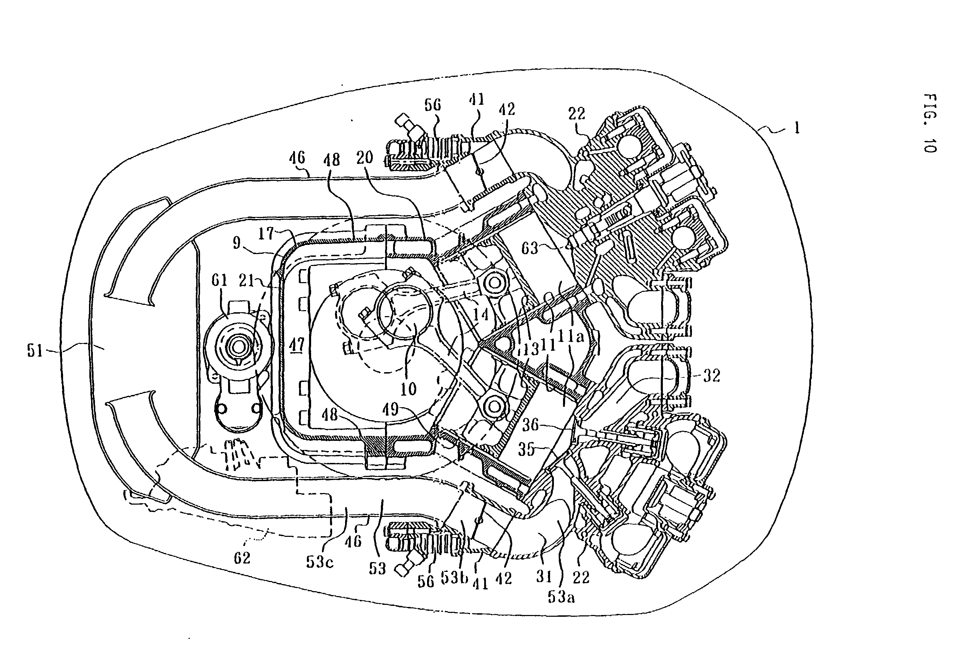

Now, referring to FIGS 9 and 10, a fifth embodiment of the invention will be described. FIG. 9 is a cross-sectional side view of an outboard motor on which an engine of the invention is mounted. FIG. 10 is a sectional plan view of the first embodiment. In FIG. 9, the engine is shown in a partially sectional side view. In FIG. 10, a vapor separator tank is shown in a dotted line.

The outboard motor is covered with a housing comprising, in the order from top downward, an upper cowling 1, a lower cowling 2, an upper casing 3, and a lower casing 4. A bracket 6 for attaching the outboard motor to a small vessel is mounted to be secured on the transom 7 of the small vessel. The main unit of the outboard motor is rotatably mounted behind the attachment bracket 6 through a pivot shaft 8.

A fuel injection, V-type, six-cylinder, four-cycle engine 9 is disposed inside a cowling set comprising the upper and lower cowlings 1 and 2. The crankshaft 10 of the engine 9 is disposed nearly upright. Paired, right and left cylinders 11 diverging in a V-shape are disposed behind the crankshaft 10. The paired, right and left cylinders 11, six in all, are arranged on levels, one over another. Six pistons 13 are connected through connecting rods 14 to the crankshaft 10. The pistons 13 are slidably disposed respectively within the cylinders 11. The case 17 of the engine 9 comprises the cylinder block 20 defining the six cylinders 11, a crankcase 21 covering the cylinder block 20 from the crankshaft 10 side, and paired, right and left cylinder heads 22 covering and closing the cylinder block 20 from the combustion chamber 11 a sides.

The bottom end of the crankshaft 10 extends to project out of the engine case 17 and is connected to a drive shaft 26 disposed within the upper casing 3. Rotation of the drive shaft 26 is transmitted through bevel gears or the like to a propeller 28 rotatably disposed in the rear end area of the lower casing 4.

The cylinder head 22 is formed, for each cylinder 11, with an intake passage 31 having an end communicating with the intake port of the combustion chamber 11a to supply air to the cylinder 11 and with an exhaust passage 32 having an end communicating with the exhaust port of the combustion chamber 11 a to discharge combustion gas. A pair of upper and lower intake ports 33 opening to the combustion chamber 11 a are disposed at the fore-end of each intake passage 31. Similarly, a pair of upper and lower exhaust ports 34 opening to the combustion chamber 11a are disposed at the fore-end of each exhaust passage 32. The intake ports 33 for the combustion chamber 11 a are opened and closed with intake valves 35, and the exhaust ports 34 for the combustion chamber 11 a are opened and closed with exhaust valves 36.

A throttle body 41 is connected to the end of each intake passage 31 of the cylinder head 22. The throttle body 41 is provided with a throttle valve 42 with its valve shaft directed upright to regulate air flow rate through the throttle body 41. To the throttle body 41 is connected an end of a plastic-made intake pipe 46. The intake pipe 46 extends forward and backward along the outer wall 48 of the crankcase 47 and its fore-end is connected to a silencer 51 disposed inside the front area of the cowlings 1,2. The intake pipes 46 are disposed on right and left sides, three for each side, one over another.

An intake passage 53 extending from the silencer 51 to the intake port 33 of the combustion chamber 11a is constituted with the above-described components; intake passage 31 of the cylinder head 22, throttle body 41, and intake pipe 46. The intake passage 53 comprises an overhung passage portion 53a extending from the intake port 33 of the combustion chamber 11 a once toward the outside in plan view (as seen from the fore-end side of the crankshaft 10), a recessed passage 53b portion curvedly extending therefrom toward the inside and a side passage extending toward the silencer 51. The overhung passage portion 53a comprises the intake passage 31 of the cylinder head 22. The recessed passage portion 53b is constituted with the throttle body 41 and is arranged to be slanted such that projection is increased in the rearward direction along the wall 49 of the cylinder 11. The side passage portion is constituted with an intake pipe 46 and disposed generally along the outer wall 48 of the crankcase 48.

The throttle body 41 is provided with an electronically controlled injector 56 for each intake passage 53. The injector 56 has an injection nozzle communicating with the recessed passage portion 53b of the intake passage 53 and the axis of the injector lies in the forward and rearward direction. The reference numeral 61 denotes a starter motor, a vapor separator is denoted by 62 and an ignition plug by 63.

With the outboard motor constituted as described above, when the crankshaft 10 rotates, air in the cowlings 1, 2 is drawn into the silencer 51 and flows through the intake pipes 46, the throttle bodies 41, and the intake passages 31 in the cylinder head 22 into the combustion chambers 11a of the cylinders 11. In each throttle body 41, fuel such as gasoline injected from the injector 56 is mixed into the air flowing through the throttle body 41 and the intake passages 31. The fuel mixture flowing into the combustion chambers 11a is ignited with the ignition plug 63 and burned. The gas produced by burning is exhausted through the exhaust passage 32 in the cylinder head 22 and the casings 3,4 out of the boss of the propeller 28. By the expansion force produced by burning of the fuel mixture, the piston 13 is reciprocated.

In the fifth embodiment, as previously described, the injector 56 is attached to the throttle body 41 with the axis of the injector 56 directed in the fore-and-aft direction (namely approximately parallel to the outside wall 48 of the crankcase 47), and the injector 56 does not overhang outwardly. Therefore, the width of the cowlings 1,2 is reduced.

Since the injector 56 is disposed outer than the intake passage 53, replacement and maintenance work can be made easily.

Further, the fuel injection from the injector 56 is mixed with air flowing in the passage 53 and the fuel which was not mixed will contact with the inner surface of the overhung passage portion 53a at relative high temperature to be XX. This allows the fuel to be mixed effectively.

This engine 9 has also two intake ports for every cylinder 11. There may be a case in which fuel is not supplied equally to these intake ports when the injector 56 injects fuel toward them. In this embodiment, however, the injector 56 injects fuel toward the inner surface of the intake passage 53 at the upper stream of the portion at which the fuel flow is branched for respective flow to the intake ports. Unequal supply of fuel to the intake ports is therefore prevented to the utmost.

Also, since the injector 56 is attached to the throttle body 41, they are handled as a single unit to shorten the time taken to assemble the engine 9.

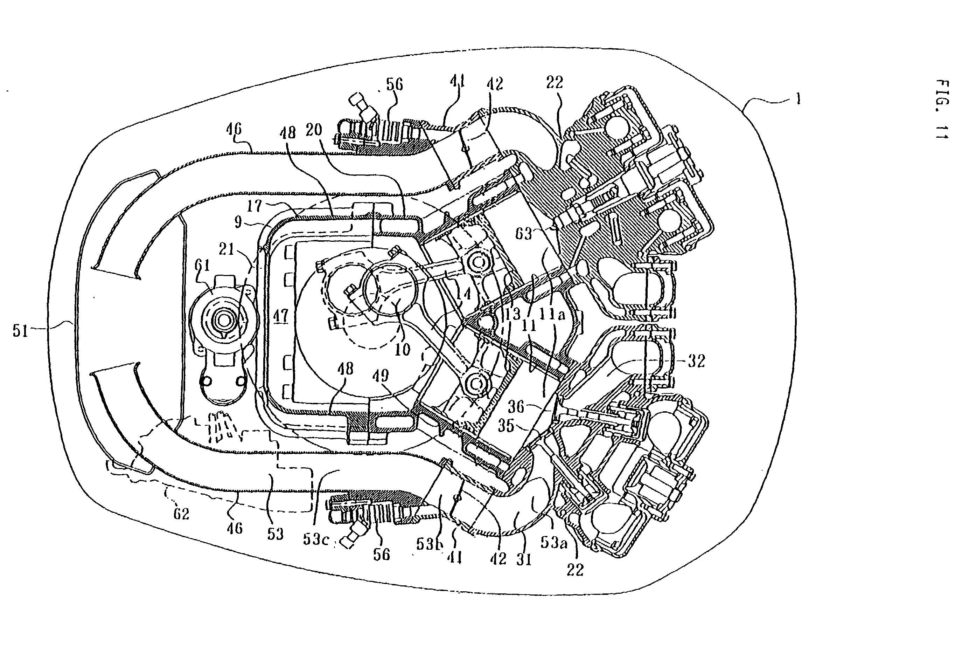

Now, a sixth embodiment of the engine according to the invention will be described. FIG. 11 is a cross-sectional plan view of the sixth embodiment. In the description of this sixth embodiment, components that correspond to those in the fifth embodiment are provided with the same reference numerals and their detailed description is omitted.

FIG. 11 is a counterpart of FIG. 10 of the fifth embodiment, and the injector 56 is attached not to the throttle body 41 but to the intake pipe 46. While the nozzle opening of the injector 56 of the fifth embodiment is communicated with the intake passage 53 on the downstream side of the throttle valve 42, in this second embodiment, it is communicated on the upstream side of the throttle valve 42 so that the injector 56 injects fuel toward a gap between the inside surface of the intake passage 53 and the throttle valve 42. Since air flow is fast in the gap between the inside surface of the intake passage 53 and the throttle valve 42, fuel injected from the injector 56 can be sprayed efficiently. Also, since the injecting direction with the injector 56 is not directed upward, there is no possibility of fuel collecting near the nozzle opening of the injector 56.

While these embodiments of the present invention are described above in detail, the invention is not limited to those embodiments but may be modified in various ways within the scope of gist of the invention as stipulated in the claims. Examples of modifications are indicated below.
(1) While the engine 9 in the above embodiments is of a V-type, six-cylinder, four-cycle engine, the type and the number of cylinders may be changed appropriately. For example, the engine can be an L- type engine. This engine is suitable to use in an outboard motor, while it can be used in any applications other than outboard motors.
(2) Layout relation between right and left sides may be interchanged.
(3) The material for the intake pipe 46 need not necessarily be plastic but may be selected appropriately.
(4) It is also possible that the driving mechanism is directly connected to the valve shaft of one of right and left throttle valves 42 to transmit the driving force from the throttle cable 91 to the valve shaft of the right or left throttle valve 42, and through the interlocking mechanisms 66,67 to the valve shaft of the other throttle valve 42.

According to this, an intake passage is disposed between an intake port of an combustion chamber and a silencer, and the part of the intake passage on the combustion chamber side extends from the intake port to the outside where an overhung passage portion is formed and further extends curvedly therefrom toward the inside where an recessed passage portion is formed. An injector, the injection nozzle of which is connected with this recessed passage portion is arranged generally along the outer wall of a crankcase and the injection nozzle is directed toward the location of the combustion chamber. The outward overhang of the injector is therefore prevented to the utmost, resulting to obtain an engine in a compact size.

In case the throttle body provided with an injector is disposed in the intake passage, the injector and the throttle body can be made into a single unit to facilitate the assembly work of the engine.

There is also a case in which said engine is a V-shape engine having a plural number of cylinders diverging generally in V-shape along a crankshaft, an intake passage is disposed between an intake port of an combustion chamber and a silencer, and this intake passage having an overhung passage portion extending from an intake port of an combustion chamber to the outside, a recessed passage portion extending curvedly to the inside from the overhung passage portion and disposed generally along a cylinder wall and a side passage portion arranged generally along the outer wall of a crankcase. In such case, the outward overhang of the injector can be reduced to the utmost, as the recessed passage portion is arranged along the cylinder wall and the side passage portion is also arranged along the outer wall of the crankcase. Additionally, the overhang toward the outside of the injector can be prevented.

In case an engine is employed in an outboard motor and the crankshaft is disposed in vertical direction, the width of the outboard motor cowling can be reduced, resulted to have an engine in a compact size.

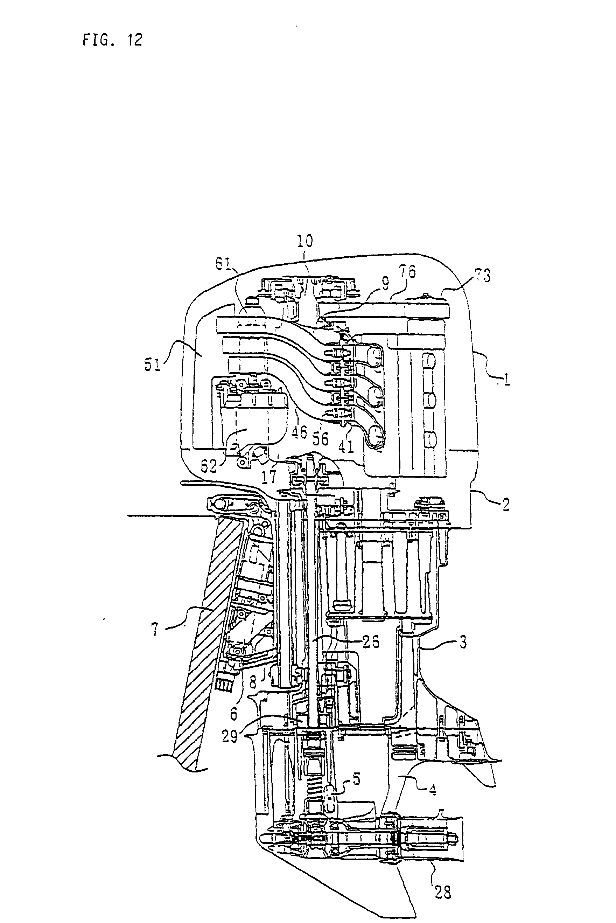

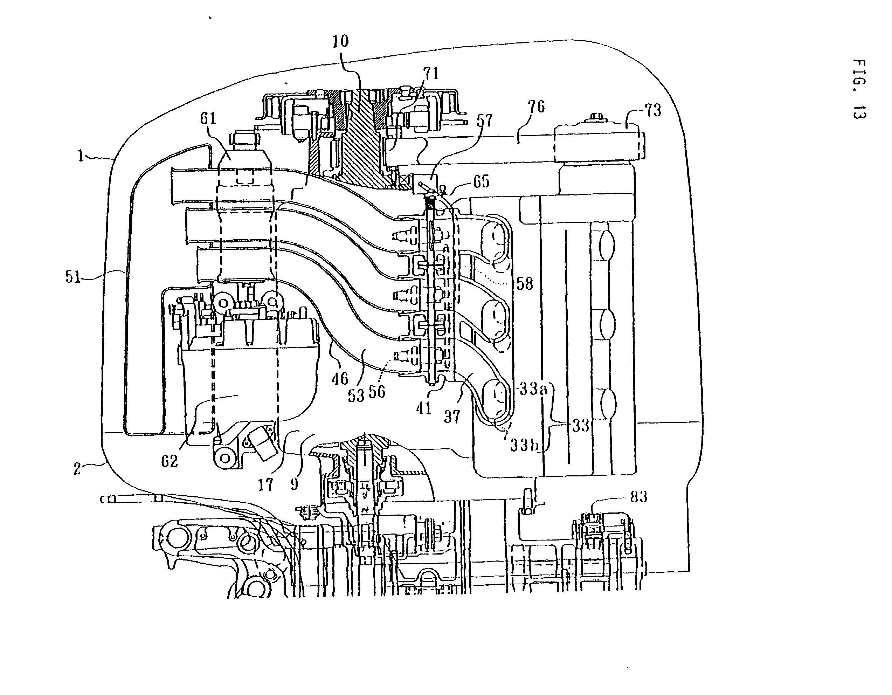

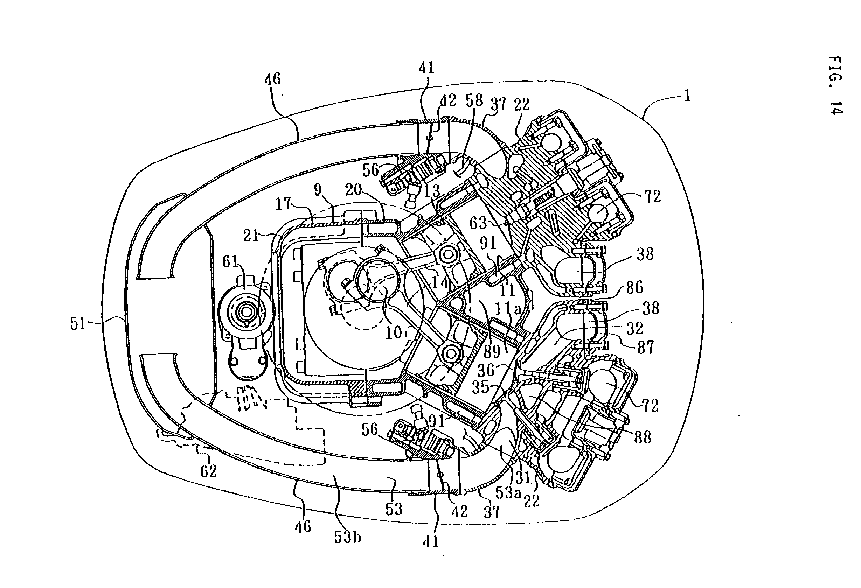

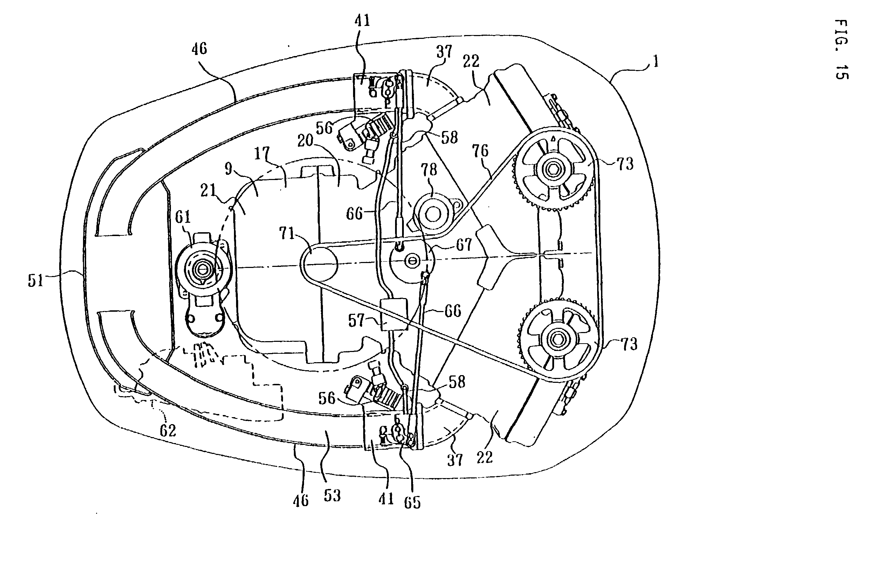

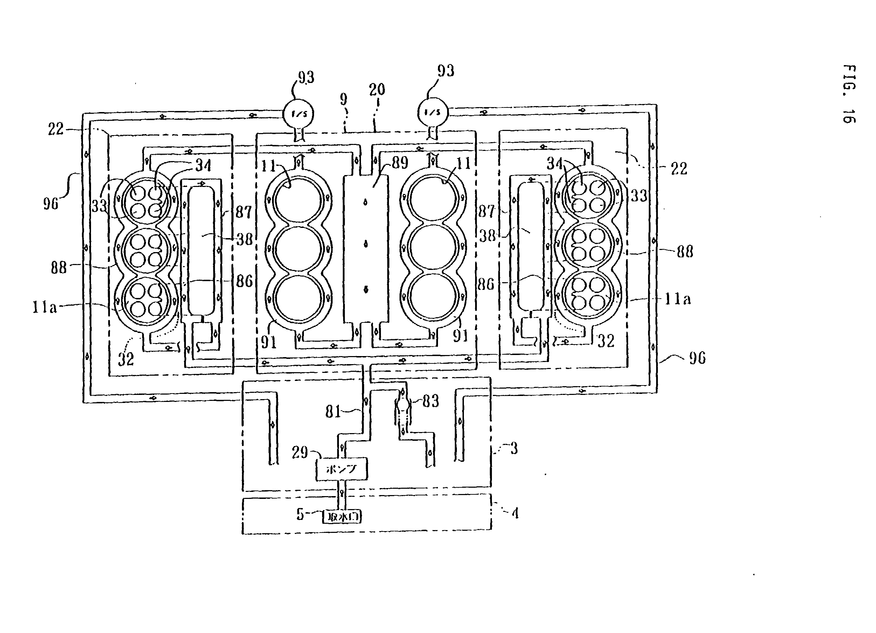

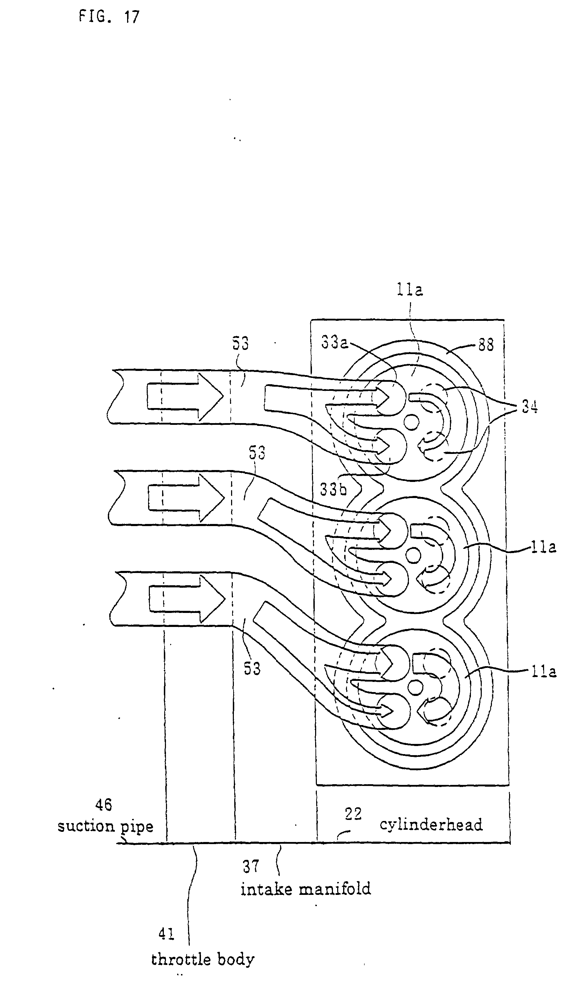

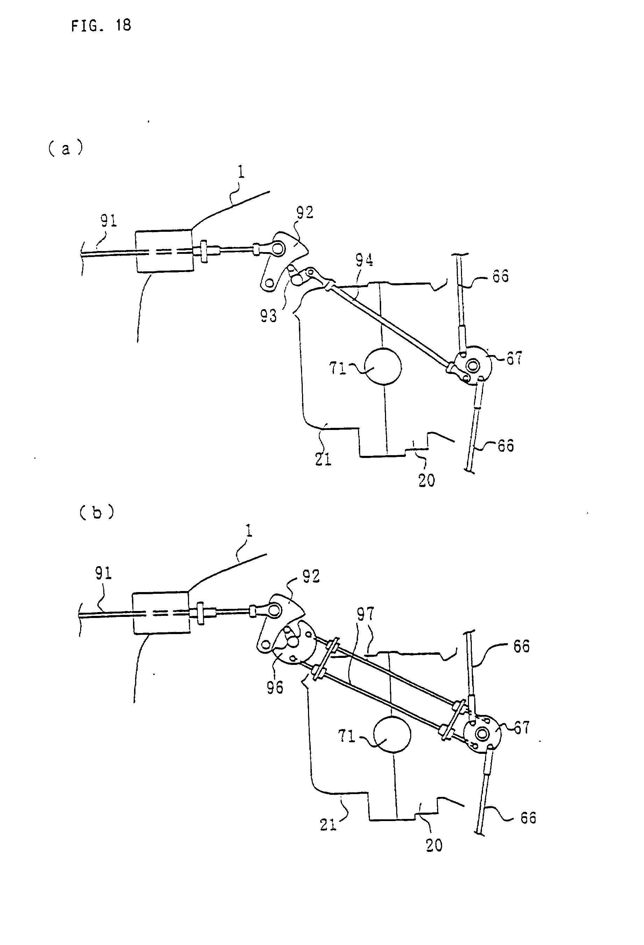

An outboard motor as a seventh form of embodying the invention will be hereinafter described in reference to FIGs. 12 to 18. FIG. 12 is a cross-sectional side view of an outboard motor of the invention. FIG. 13 shows an essential part of FIG. 12 in an enlarged scale. FIG. 14 is a cross-sectional plan view of the upper part of the outboard motor as the seventh embodiment. FIG. 15 is an internal plan view of the outboard motor as the seventh embodiment. FIG. 16 schematically shows the flow of cooling water. FIG. 17 is an enlarged view of an essential part of intake passages. FIG. 18 shows throttle valve operating mechanisms; (a) as a seventh embodiment and (b) as a modified embodiment. Incidentally, FIGs. 12 and 13 are shown in side views partially cut out. In FIGs. 14 and 15, the vapor separator tank is shown with broken lines. The throttle valve operating mechanism is not shown in FIG. 16.

The outboard motor is covered with a housing comprising, in the order from top downward, an upper cowling 1, a lower cowling 2, an upper casing 3, and a lower casing 4. The lower casing 4 is formed with a cooling water intake port 5. A bracket 6 for attaching the outboard motor to a small vessel is mounted on the transom 7 of the small vessel. The main unit of the outboard motor is attached behind the attachment bracket 6 through a pivot shaft 8 for swiveling.

A fuel injection, V-type, six-cylinder, four-cycle engine 9 is disposed inside a cowling set comprising the upper and lower cowlings 1 and 2. The crankshaft 10 of the four-cycle engine 9 is disposed nearly upright. Paired, right and left cylinders 11 diverging in a V-shape are disposed behind the crankshaft 10. The paired, right and left cylinders, six in all, are arranged on three levels, one over another. Six pistons 13 are connected through connecting rods 14 to the crankshaft 10. The pistons 13 are slidably disposed respectively within the cylinders 11. The case 17 of the engine 9 comprises the cylinder block 20 defining the six cylinders 11, a crankcase 21 covering the cylinder block 20 from the crankshaft 10 side, and paired, right and left cylinder heads 22 covering and closing the cylinder block 20 from the combustion chamber 11a sides.

The bottom end of the crankshaft 10 extends to project out of the engine case 17 and is connected to a drive shaft 26 disposed within the upper casing 3. Rotation of the drive shaft 26 is transmitted through bevel gears or the like to a propeller 28 rotatably disposed in the rear end area of the lower casing 4. A cooling water pump 29 is disposed in an intermediate position on the drive shaft 26 and driven by the rotation of the drive shaft 26.

The cylinder head 22 is formed, for each cylinder 11, with an intake passage 31 for supplying air to the cylinder 11 and with an exhaust passage 32 for discharging combustion gas out of the cylinder 11. A pair of upper and lower intake ports 33 opening to the combustion chamber 11 a are disposed at the fore-end of each intake passage 31. Similarly, a pair of upper and lower exhaust ports 34 opening to the combustion chamber 11a are disposed at the fore-end of each exhaust passage 32. The intake ports 33 for the combustion chamber 11 a are opened and closed with intake valves 35, and the exhaust ports 34 for the combustion chamber 11 a are opened and closed with exhaust valves 36. Part of each intake passage 31 on the intake port 33 side, namely on the downstream side, is bifurcated and respectively connected to the intake ports 33. On the other hand, the other, upstream sides of the intake passages 31 are joined together. The exhaust passages 32 of the cylinder head 22 are connected to a vertically extending, collective exhaust passage 38, so that combustion gases flowing through the upper and lower exhaust passages 32 flow into the collective exhaust passage 38 to flow together. A pair of the collective exhaust passage 38 are disposed on right and left sides of the rear part of the cylinder head 22.

A throttle body 41 is connected through an intake manifold 37 to the upstream end of each intake passage 31 of the cylinder head 22. The throttle body 41 is provided with a throttle valve 42 with its valve shaft directed upright to regulate air flow rate through the throttle body 41. To the throttle body 41 is connected an end of a plastic-made intake pipe 46. The intake pipe 46 extends from the throttle body 41 forward and its fore-end is connected to a silencer 51 made of a plastic material and disposed inside the front area of the cowlings 1,2. The intake pipes 46 are disposed on right and left sides, three for each side, one over another. The plastic-made intake pipe 46 and silencer 51 are joined together by welding, fitting, or with an adhesive before being attached to the main unit of the engine.

An intake passage 53 extending from the silencer 51 to the intake port 33 of the combustion chamber 11a is constituted with the above-described components; intake passage 31 of the cylinder head 22, intake manifold 37, throttle body 41, and intake pipe 46. The intake passage 53 comprises an outward-extending passage portion 53a extending from the intake port 33 of the combustion chamber 11a once toward the outside in plan view (as seen from the fore-end side of the crankshaft 10) and then continues to a connecting passage portion 53b extending toward the silencer 51, with the fore-end of the connecting passage portion 53b connected to the silencer 51. The outward-extending passage portion 53a comprises the intake passage 31 and the intake manifold 37 of the cylinder head 22. The connecting passage portion 53b is constituted with the throttle body 41 and the intake pipe 46.

In side view, the intake passage 53 is formed so that the outward-extending passage portion 53a is sloped up forward from the intake port 33 of the combustion chamber 11a, and is generally horizontal at the throttle body 41. The intake pipe 46 is sloped up forward. The slope angles of the outward-extending passage portion 53a and the intake pipe 46 are milder for the intake passage 53 located on an upper level in comparison with the intake passage 53 located on a lower level.

The throttle body 41 is provided with an electronically controlled injector 56 for each intake passage 53. The injector 56 is disposed between the engine case 17 and the intake passage 53 with its nozzle opening communicating with the intake passage 53. Fuel such as gasoline is supplied from the injector 56 to the air in the intake passage 53. As described above, part of the intake passage 53 on the downstream side of the injector 56 is sloped down rearward, with the slope angle greater for the intake passage 53 located on a lower level in comparison with the intake passage 53 located on an upper level. Therefore, the distance between the injector 56 and the intake port 33, namely the flow passage length, is longer for the intake passage 53 located on a lower level in comparison with the intake passage 53 located on an upper level. The vertical distance between axes of the injectors 56 is smaller than the vertical distance between centers of the intake ports 33 for each combustion chamber 11a.

An idling speed controller (ISC) 57 as an intake system component for controlling the air flow rate for reducing fluctuation in revolution at idling speeds is disposed on the top side of the engine case 17. An air supply passage 58 from the ISC 57 is connected to each throttle body 41. The symbol 61 denotes a starter motor, 62 a vapor separator tank, and 63 an ignition plug.

The throttle bodies 41 are disposed on the right and left of the engine case 17, three for each side, one over another. The valve shafts of the throttle valves 42 of the throttle bodies 41 disposed one over another are interconnected for interlocked movement. The top end of the valve shaft of the topmost throttle valve 42 projects above the engine case 17. A lever 65 is secured to the top end of the valve shaft of the topmost throttle valve 42. The lever 65 is connected to a turning plate 67 through a link 66, etc. The turning plate 67 is attached to the top of the engine case 17. When a throttle lever (not shown) is operated, as shown in FIG. 18(a), the turning plate 67 is turned through a actuating mechanism including a throttle cable 91, a cam lever 92, an L-shaped slide lever 93, and a rod 94. The turn of the turning plate 67 is transmitted through right and left links 66 to levers 65 secured to the valve shafts of the right and left throttle valves 42. In this way, when the valve shafts of the throttle valves 42 turn, the air flow rates through the throttle bodies 41 are regulated.

FIG. 18 (b) shows a modified example of the actuating mechanism. In this example, when the throttle lever is operated, the turning plate 67 is turned through the throttle cable 91, the cam lever 92, a slide lever 96, and a pair of cables 97.

A pulley 71 for actuating the camshaft is disposed at the top end of the crankshaft 10, and driven pulleys 73 are disposed at the top end of the camshaft 72 for actuating the exhaust valve 36. A belt 76 is routed around the camshaft actuating pulley 71 and the driven pulleys 73. A tensioner 78 is provided to apply tension to the belt 76. The above -described links 66 as components of she throttle interlocking mechanism for actuating the valve shafts of the throttles 42 are disposed in the space between the engine case 17 and the belt 76.

With the outboard motor constituted as described above, when the crankshaft 10 rotates, air in the cowlings 1,2 is drawn into the silencer 51 and flows through the intake pipes 46, the throttle bodies 41, the intake manifold 37, and the intake passages 31 in the cylinder head 22 into the combustion chambers 11 a of the cylinders 11. In each throttle body 41, fuel such as gasoline injected from the injector 56 is mixed into the air flowing through the throttle body 41, the intake manifold 37 and the intake passages 31. The fuel mixture flowing into the combustion chambers 11 a is ignited with an ignition plug 63 and burned. The gas produced by burning is exhausted through the exhaust passage 32 in the cylinder head 22, the collective exhaust passage 38, and the casings 3, 4 out of the boss of the propeller 28. By the expansion force produced by burning of the fuel mixture, the piston 13 is reciprocated to rotate the crankshaft 10 through the connecting rod 14.

The rotation of the crankshaft 10 also operates the cooling water pump 29 to draw in cooling water from outside the outboard motor through the cooling water intake port 5 of the lower casing 4. The water drawn in flows up through an upward flow passage 81 to the engine 9. In the middle of the upward flow passage 81 is disposed a pressure control valve 83 in fluid communication with the passage. The pressure control valve 83 keeps the cooling water pressure in the upward flow passage 81 to a pre-set value by discharging the cooling water in the upward flow passage 81 when the pressure exceeds the pre-set value. The cooling water entering the engine 9 reaches a thermostat 93 by way of an exhaust passage cooling water passage 86 around the exhaust passage 32 of each combustion chamber 11 a, a collective exhaust passage cooling water passage 87 around the collective exhaust passage 38, a combustion chamber cooling water passage 88 around the combustion chamber 11a of the cylinder head 22, a V-bank jacket 89 in the cylinder block 20, and a cylinder cooling water passage 91 around the cylinders of the cylinder block 20. The thermostat 93 permits the flow of cooling water when the cooling water temperature exceeds a pre-set value, and almost stops or permits a very small amount of the cooling water flow, when the cooling water temperature is below the pre-set value. The thermostat 93 prevents the engine 9 from being overcooled with the cooling water. The cooling water flowing out of the thermostat 93 with a relatively high temperature (such as 60 degrees C or higher) is discharged out of the outboard motor through a post cooling water passage 96. In this way, the water of a relatively low temperature drawn in from outside the outboard motor flows into the lower part of the engine 9 meanders up and is discharged out of the outboard motor. As a result, the temperature of the engine 9 is higher in its upper part than in its lower part.

In the seventh embodiment described above, the flow passage length or the distance between the nozzle opening of the injector 56 and the intake port 33 of the combustion chamber 11 a is the shortest for the topmost intake passage 53 and becomes longer as the intake passage 53 is located on a lower level. Therefore, the time required for the fuel injected with the injector 56 to reach the intake port 33 is shorter for an upper level intake passage 53 than for a lower level passage. Also, fuel in the intake passage 53 evaporates more easily as the intake passage 53 is located on a higher level because the cooling water flows into the engine 9 from its lower part and meanders up, and the engine 9 temperature is higher in its upper part than in its lower part. Therefore, the fuel injected from the injector 56 is diffused in the air at a higher rate per unit time in the intake passage 53 located on a higher level than on a lower level. However, as described above, since the time required for the fuel injected with the injector 56 to reach the intake port 33 is shorter for an upper level intake passage 53 than for a lower level passage, a large difference in the diffusion rate of the fuel when it reaches the intake port 33 is less likely to occur between the intake passages 53 located an different levels.

As a result, a large difference in output is prevented from occurring between cylinders 11 located in different heights, so that the engine 9 is operated in a stabilized manner.

Furthermore, the intake ports 33 of the combustion chamber 11a are provided as a pair of upper and lower ones, with the slope angle of the intake passage 53 is smaller as it is located in a higher position. Therefore, as shown in FIG. 17, the difference in air flow rate between the upper intake port 33a and the lower intake port 33b of each combustion chamber 11a is smaller for the intake passage 53 located in a higher position. As a result, the amount of swirl flow from the upper intake port 33a to the lower intake port 33b of the combustion chamber 11a is smaller for the intake passage 53 located in a higher position. Since the larger the swirl, the higher the fuel combustion efficiency in the combustion chamber 11 a of the cylinder 11, combustion efficiency is higher for the cylinder 11 in a higher position as far as the amount of swirl only is considered. The difference in combustion efficiency between the cylinders 11 due to the temperature difference between the upper and lower parts of the engine 9 can be compensated with the difference in the swirl.

Part of the intake passage 53 on the downstream side of the injector 56 is sloped down rearward, and the slope angle is greater for the intake passage 53 on a lower side than on an upper side. Therefore, in comparison with the case in which the upper and lower intake passages 53 are disposed generally parallel to each other in accordance with the arrangement of the intake ports 33, the vertical distance between the throttle bodies 41 can be reduced. As a result, the height of the throttle body assembly including all the throttle bodies 41 in the top to the bottom stages can be reduced, and the assembly is made compact.

Furthermore, since the intake pipe 46 is sloped down rearward, and the slope angle of the intake pipe 46 is greater as it is located a lower position than in a higher position, a relatively large space can be formed below the front part of the intake pipe 46. Therefore, components such as the vapor separator tank 62 can be disposed below the front part of the intake pipe 46. As a result, the space below the intake pipe 46 can be effectively used.

The throttle body 41 is disposed in the middle of the intake passage 53 and the plastic-made intake pipe 46 and silencer 51 are on the forward or upstream side of the throttle body 41. In this way, since the throttle body 41 for regulating the air flow rate is disposed on the downstream side of the intake pipe 46 and silencer 51, air flow rate on the downstream side of the throttle body 41 varies little even if external air finds its way into the intake pipe 46 and silencer 51 through the joint between the intake pipe 46 and silencer 51. Therefore, attachment accuracy of the intake pipe 46 and silencer 51 can be lowered so that work of assembly and processing is made easier.

The intake pipe 46 and the silencer 51 are assembled together before being attached to the engine main unit. Therefore, the intake pipe 46 and the silencer 51 are handled as a single unit to facilitate the attachment work.

Also, since the injector 56 is attached to the throttle body 41, they are handled as a single unit to shorten the time taken to assemble the engine 9. As a result, the number of steps in assembling the engine is reduced.

Since the ISC 57 is disposed on the top of the engine case 17 to supply air to the throttle bodies 41 on the right and left through an air supply passage 58, air can be supplied to a plural number of throttle bodies 41 with the single ISC 57.

Since the valve shafts of the throttle valves 42 of the throttle bodies 41 are disposed in the vertical direction and the valve shafts of the right and left topmost throttle bodies 41 are made to interlock each other through an interlocking mechanism (including the turning plate 67 and the links 66), the interlocking mechanism does not extend beyond the lateral side of the engine 9 and so the width of the cowlings 1, 2 is reduced.

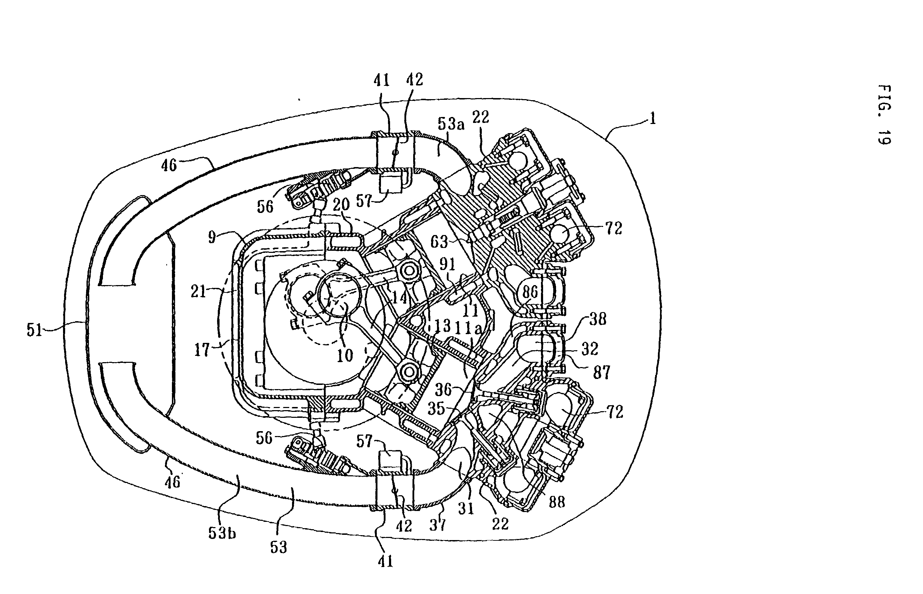

Now another outboard motor as an eighth form of embodying the invention will be described. FIG. 19 is a cross-sectional plan view of the upper part of the outboard motor as the eighth embodiment. In the description of this eighth embodiment, components that correspond to those in the seventh embodiment are provided with the same symbols and their detailed description is omitted.

FIG. 19 is a counterpart of FIG. 14 of the seventh embodiment, and the injector 56 is attached not to the throttle body 41 but to the intake pipe 46. While the nozzle opening of the injector 56 of the first embodiment is communicated with the intake passage 53 on the downstream side of the throttle valve 42, in this eighth embodiment, it is communicated on the upstream side of the throttle valve 42 so that the injector 56 injects fuel toward a gap between the inside surface of the throttle body 41 and the throttle valve 42. Since air flow is fast in the gap between the inside surface of the throttle body 41 and the throttle valve 42, fuel injected from the injector 56 can be sprayed efficiently. Also, since the injecting direction with the injector 56 is not directed upward, there is no possibility of fuel collecting near the nozzle opening of the injector 56.

The ISC 57 is attached to each throttle body 41. Since the injector 56 is attached to the intake pipe 46, the injector 56 and the intake pipe 46 can be made into a single unit. Therefore, the injector 56 and the intake pipe 46 can be attached as a single unit, so that the time required for the assembly work for the engine 9 is shortened.

Incidentally, the description on other points in the seventh embodiment such as the reaching time from the nozzle opening of the injector 56 to the intake port 33 and the swirl is generally true also in this embodiment.

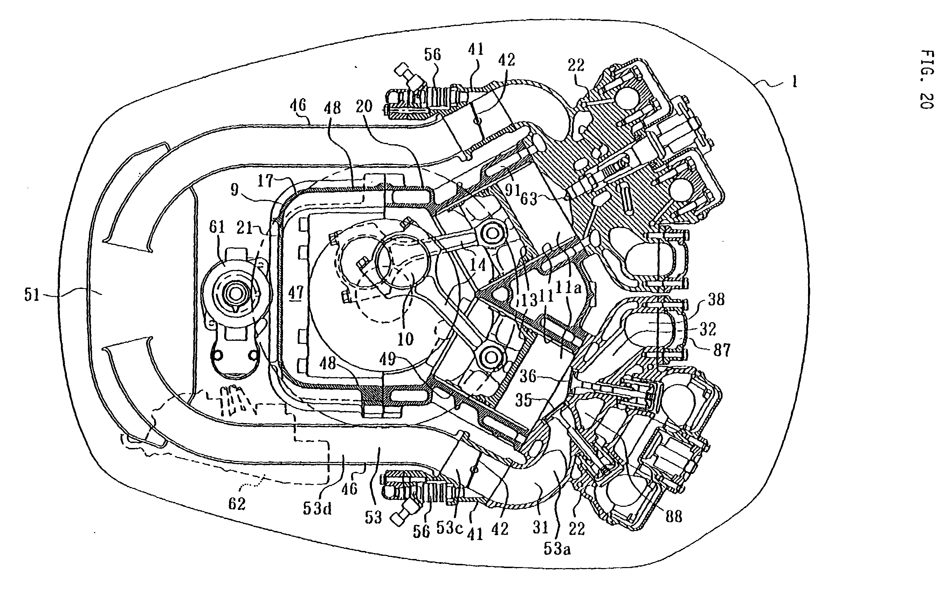

Next, still another outboard motor as a ninth form of embodying the invention will be described. FIG. 20 is a cross-sectional plan view of the upper part of the outboard motor as the ninth embodiment. In the description of this ninth embodiment, components that correspond to those in the seventh embodiment are provided with the same symbols and their detailed description is omitted. In FIG. 20, the vapor separator tank is shown with broken lines.

FIG. 20 is a counterpart of FIG. 14 of the seventh embodiment, and the intake manifold (shown in FIG. 14 as a separate part 37) is formed integrally with the cylinder head 22. The intake passage 53 comprises an outward-extending passage portion 53a extending from the intake port 33 of the combustion chamber 11a once toward the outside in plan view (as seen from the fore-end side of the crankshaft 10) and then continues to a draw-in passage portion 53c curved to extend inward and to a side passage portion 53d extending to the silencer 51. The outward-extending passage portion 53a comprises the intake passage 31 of the cylinder head 22. The draw-in passage portion 53c comprises the throttle body 41 and is sloped so as to be located more outside as it extends rearward approximately along the wall 49 of the cylinder 11. The side passage portion 53d comprises the intake passage 46 extending approximately along the outside wall 48 (namely approximately in front-rear direction) of the crank chamber 47.

The injector 56 is attached to the throttle body 41 with the axis of the injector 56 directed in the fore-and-aft direction (namely approximately parallel to the outside wall 48 of the crank chamber 47), and the injector 56 does not extend outward. Therefore, the width of the cowlings 1, 2 is reduced.

Since the injector 56 is disposed outer than the intake passage 53, replacement and maintenance work can be made easily.

Also, the description on other points in the seventh embodiment such as the reaching time from the nozzle opening of the injector 56 to the intake port 33 and the swirl is generally true in this embodiment too.

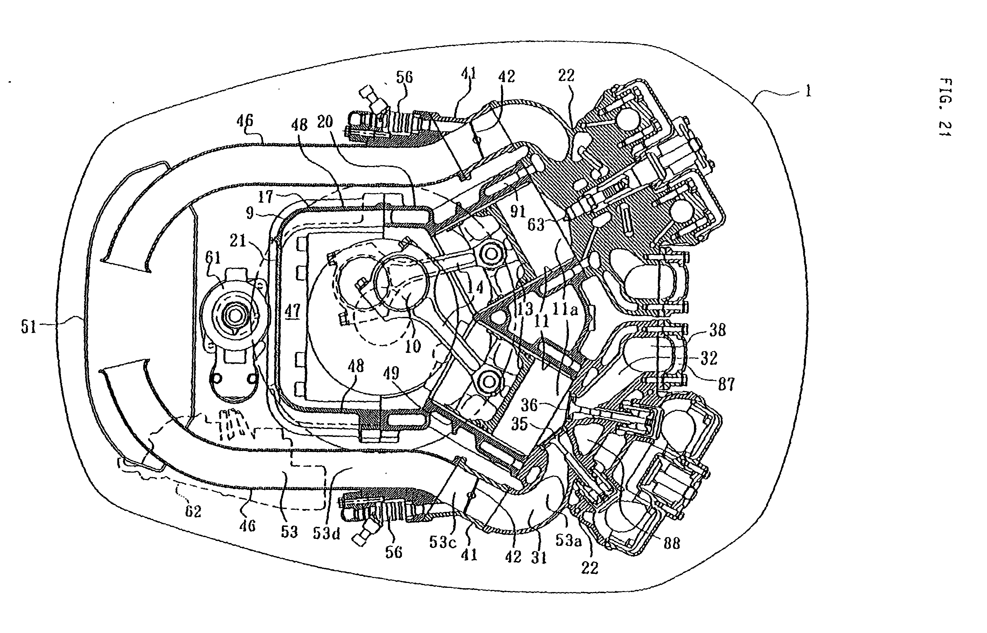

Next, still another outboard motor as a tenth form of embodying the invention will be described. FIG. 21 is a cross-sectional plan view of the upper part of the outboard motor as the tenth embodiment. In the description of this tenth embodiment, components that correspond to those in the seventh embodiment are provided with the same symbols and their detailed description is omitted. In FIG. 21, the vapor separator tank is shown with broken lines.

FIG. 21 is a counterpart of FIG. 20 of the ninth embodiment, and the injector 56 is not attached to the throttle body 41 but to the intake pipe 46. While the nozzle opening of the injector 56 of the ninth embodiment is communicated with the intake passage 53 on the downstream side of the throttle valve 42, in this tenth embodiment, it is communicated on the upstream side of the throttle valve 42 so that the injector 56 injects fuel toward the gap between the inside surface of the throttle body 41 and the throttle valve 42. Since air flow is fast in the gap between the inside surface of the throttle body 41 and the throttle valve 42, fuel injected from the injector 56 can be sprayed efficiently. Also, since the injecting direction of the injector 56 is not directed upward, there is no possibility of fuel collecting near the nozzle opening of the injector 56.

Incidentally, the same description as in the seventh embodiment about the reaching time from the nozzle opening of the injector 56 to the intake port 33 and about the swirl is generally applicable also to this embodiment.

While further embodiments of the present invention are described above in detail, the invention is not limited to those embodiments but may be modified in various ways within the scope of gist of the invention as stipulated in the is claimed is. Examples of modifications are indicated below.
(1) While the engine 9 in the above embodiments is of a V- type, six-cylinder, four-cycle engine, the type and the number of cylinders may be changed appropriately. For example, the engine can be an L-type engine.
(2) Layout relation between right and left sides may be interchanged.
(3) The material for the silencer 51 and the intake pipe 46 need not necessarily be plastic but may be die-cast aluminum.
(4) It is also possible that the actuating mechanism is directly connected to the valve shaft of one of right and left throttle valves 42 to transmit the actuating force from the throttle cable 91 to the valve shaft of the right or left throttle valve 42, and through the interlocking mechanisms 66, 67 to the valve shaft of the other throttle valve 42.

According to these further embodiments, the engine is cooled with the water drawn in from the lower part of the outboard motor and the engine temperature is lower in its lower part than in its upper part. Therefore, the diffusion efficiency of the fuel injected from the injector is lower in a lower side intake passage than in an upper side intake passage. However, since the distance between the injector and the intake port is longer in a lower side intake passage than in an upper side intake passage, the time required for the fuel injected from the injector to reach the intake part is longer for the lower side intake passage. Therefore, fuel is diffused for a longer period of time and the amount of diffusion is greater in the lower side intake passage. As a result, the difference in the diffusion amount due to temperature difference between upper and lower parts of the engine can be minimized, and the difference in combustion efficiency between cylinders can be reduced.

In case the throttle body provided with an injector is disposed in the middle of the intake passage, the injector and the throttle body can be made into a single unit to facilitate the assembly work of the engine.

There is also a case in which the intake ports are provided as a pair of upper and lower ones for each combustion chamber. In that case, the slope angle of part of the intake passage on the downstream side of the injector is greater for the intake passage located on a lower side than on a higher side. This causes a larger swirl in the combustion chamber communicating to a lower side intake passage than in the combustion chamber communicating to a higher side intake passage, and causes a higher combustion efficiency. This difference in the size of the swirl can compensate the difference in the combustion efficiency between cylinders due to temperature difference between upper and lower parts of the engine.

In case a V- type engine is employed in an outboard motor and the top ends of the valve shafts of the right and left throttle valves are interconnected for interlocked movement through an interlocking mechanism, the interlocking mechanism for interlocking the right and left throttle valve shafts does not extend sideways and so the width of the outboard motor cowling is reduced.

## Claims

1. A vertical type internal combustion engine (9) for an outboard motor comprising:
at least two cylinders (11), wherein each cylinder (11) has associated an intake passage (53) and comprises a combustion chamber (11a) having an intake port,
a throttle body (41) disposed at an intermediate portion of the intake passage (53), and
an injector (56) attached to the throttle body (41) for injecting fuel,
**characterized in that** the intake passage (53) is constituted with an intake pipe (46) and disposed between a silencer (51) and the intake port of the combustion chamber (11a), and a distance between the injector (56) and the intake port is longer for the intake passage (53) located on a lower level than for the intake passage (53) located on an upper level in relation to the vertical axis of the engine.

2. A vertical type internal combustion engine according to claim 1,
**characterized in that** the injector nozzle communicates with the intake passage (53) downstream of a throttle valve (42) mounted within the throttle body (41).

3. A vertical type internal combustion engine according to claim 1,
**characterized in that** an injector nozzle communicates with the intake passage (53) upstream of a throttle valve (42) mounted within the throttle body (41) and fuel is injected from the injector (56) toward a gap formed between the inner surface of the throttle body (41) and the throttle valve (42).

4. A vertical type internal combustion engine according to one of claims 1, 2 or 3, **characterized in that** the silencer (51) and the intake pipe (46) are made of plastic material.

5. A vertical type internal combustion engine according to one of the preceding claims 1 to 4, **characterized in that** a crankshaft (10) is disposed upright and valve shafts of the throttle valves (42) in the throttle bodies (41) are disposed upright.

6. A vertical type internal combustion engine according to at least one of the preceding claims 1 to 5, **characterized in that** the part of the intake passage (53) on the combustion chamber side extends from the intake port to the outside where an overhung passage portion (53a) is formed, and further extends curvedly therefrom toward the inside where a recessed passage portion (53b) is formed,
the injector (56), the injection nozzle of which is connected with the recessed passage portion (53b), is arranged generally along the outer wall (48) of a crankcase (47) and the injection nozzle is directed toward the location of the combustion chamber (11a).

7. A vertical type internal combustion engine according to claim 6,
**characterized in that** the throttle body (41) is arranged at the recessed passage portion (53b) and the injector (56) is attached to the throttle body (41).

8. A vertical type internal combustion engine being a V-shape engine having a plural number of cylinders (11) diverging generally in V-shape along the crankshaft (10) according to claim 6 or 7, **characterized in that** the intake passage (53) having:
the overhung passage portion (53a) extending from the intake port of an combustion chamber (11) to the outside,
the recessed passage portion (53b) extending curvedly to the inside from the overhung passage portion (53a) and disposed generally along a cylinder wall (49), and
a side passage portion (53c) arranged generally along the outer wall (48) of a crankcase (47),
the injector (56), the injection nozzle of which is connected with the recessed passage portion (53b), is arranged generally along the outer wall (48) of the crankcase (47) and the injection nozzle is directed toward the location of the combustion chamber (11 a).

9. A vertical type internal combustion engine according to one of claims 6, 7 or 8, **characterized in that** the crankshaft (10) is oriented in vertical direction.

10. A vertical type internal combustion engine, wherein the cylinders (11) arranged in line are cooled with water drawn in from a first end of the line to a second end (1,2) according to at least one of the preceding claims 1 to 9, **characterized in that**
a slope of part of the intake passage (53) on the downstream side of the throttle body (41) is steeper for the intake passage (53) located on the first end (1) than on the second end (2).

11. A vertical type internal combustion engine according to claim 10,
**characterized in that** a pair of intake ports is provided for each cylinder (11).

12. A vertical type internal combustion engine according to claim 10 or 11, wherein a cylinder head (22) covers the cylinders (11) from their combustion chamber side, the cylinder head (22) is formed for each cylinder with an intake port opening to the combustion chamber (11a),
**characterized in that** top ends of the right and left throttle valve shafts are interconnected with the valve shaft of the uppermost throttle valve (42) projecting above an engine case for interlocked movement through an interlocking mechanism (66) disposed over the engine case, and
the slope of part of the intake passage on the downstream side of the throttle body (41) is steeper for the intake passage (53) located on a lower level than for the intake passage (53) located on an upper level.

## Patentansprüche

1. Brennkraftmaschine (9) vom Vertikaltyp für einen Außenbordmotor, mit:
zumindest zwei Zylindern (11), wobei jeder Zylinder (11) einen zugehörigen Einlasskanal (53) hat und eine Verbrennungskammer (11a) aufweist, die eine Einlassöffnung hat,
einem Drosselkörper (41), angeordnet an einem Zwischenabschnitt des Einlasskanal (53), und
einem Einspritzer (56), verbunden mit dem Drosselkörper (41) zum Einspritzen von Kraftstoff,
**dadurch gekennzeichnet, dass** der Einlasskanal (53) mit einem Einlassrohr (46) gebildet ist und zwischen einem Schalldämpfer (51) und der Einlassöffnung der Verbrennungskammer (11a) angeordnet ist, und ein Abstand zwischen dem Einspritzer (56) und der Einlassöffnung für den Einlasskanal (53), der auf einem niedrigeren Niveau angeordnet ist, länger ist, als für den Einlasskanal (53), der auf einem höheren Niveau in Bezug auf die vertikale Achse des Motors angeordnet ist.

2. Brennkraftmaschine vom Vertikaltyp nach Anspruch 1,
**dadurch gekennzeichnet, dass** die Einspritzerdüse mit dem Einlasskanal (53) stromab eines Drosselventiles (42), das innerhalb des Drosselkörpers (41) montiert ist, in Verbindung ist.

3. Brennkraftmaschine vom Vertikaltyp nach Anspruch 1,
**dadurch gekennzeichnet, dass** eine Einspritzerdüse mit dem Einlasskanal (53) stromauf eines Drosselventiles (42), das innerhalb des Drosselkörpers (41) montiert ist, in Verbindung ist und Kraftstoff von dem Einspritzer (56) in Richtung zu einem Spalt, der zwischen der Innenoberfläche des Drosselkörpers (41) und dem Drosselventil (42) gebildet ist, eingespritzt wird.

4. Brennkraftmaschine vom Vertikaltyp nach einem der Ansprüche 1, 2 oder 3, **dadurch gekennzeichnet, dass** der Schalldämpfer (51) und das Einlassrohr (46) aus einem Kunststoffmaterial hergestellt sind.

5. Brennkraftmaschine vom Vertikaltyp nach einem der vorhergehenden Ansprüche 1 bis 4, **dadurch gekennzeichnet, dass** eine Kurbelwelle (10) aufrecht angeordnet ist und Ventilwellen der Drosselventile (42) in den Drosselkörpem (41) aufrecht angeordnet sind.

6. Brennkraftmaschine vom Vertikaltyp nach zumindest einem der vorhergehenden Ansprüche 1 bis 5, **dadurch gekennzeichnet, dass** der Teil des Einlasskanales (53) auf der Seite der Verbrennungskammer sich von der Einlassöffnung nach außen erstreckt, wo ein Überhangkanalabschnitt (53a) gebildet ist, und sich außerdem gekrümmt davon in Richtung der Innenseite erstreckt, wo ein ausgenommener Kanalabschnitt (53b) gebildet ist,
wobei der Einspritzer (56), dessen Einspritzerdüse mit dem ausgenommenen Kanalabschnitt (53b) verbunden ist, im wesentlichen entlang der Außenwand (48) eines Kurbelgehäuses (47) angeordnet ist und die Einspritzerdüse in Richtung auf den Ort der Verbrennungskammer (11a) gerichtet ist.

7. Brennkraftmaschine vom Vertikaltyp nach Anspruch 6, **dadurch gekennzeichnet, dass** der Drosselkörper (41) an dem ausgesparten Kanalabschnitt (53b) angeordnet ist und der Einspritzer (56) mit dem Drosselkörper (41) verbunden ist.

8. Brennkraftmaschine vom Vertikaltyp, die ein V- Motor ist, der eine mehrfache Anzahl von Zylindern (11) hat, die im Wesentlichen in V- Form entlang der Kurbelwelle (10) auseinanderstreben, nach Anspruch 6 oder 7, **dadurch gekennzeichnet, dass** der Einlasskanal (53) aufweist:
den Überhangkanalabschnitt (53a), der sich von der Einlassöffnung einer Verbrennungskammer (11) nach außen erstreckt,
den ausgesparten Kanalabschnitt (53b), der sich gekrümmt zu der Innenseite von dem Überhangkanalabschnitt (53a) erstreckt und im wesentlichen entlang einer Zylinderwand (49) angeordnet ist, und
einen Seitenkanalabschnitt (53c), der im wesentlichen entlang der Außenwand (48) eines Kurbelgehäuses (47) angeordnet ist,
den Einspritzer (56), dessen Einspritzdüse mit dem ausgesparten Kanalabschnitt (53b) verbunden ist, im wesentlichen entlang der Außenwand (48) des Kurbelgehäuse (47) angeordnet ist und die Einspritzdüse in Richtung zu dem Ort der Verbrennungskammer (11a) gerichtet ist.

9. Brennkraftmaschine vom Vertikaltyp nach einem der Ansprüche 6, 7 oder 8, **dadurch gekennzeichnet, dass** die Kurbelwelle (10) in vertikaler Richtung gerichtet ist.

10. Brennkraftmaschine vom Vertikaltyp, wobei die in Reihe angeordneten Zylinder (11) mit Wasser gekühlt werden, das von einem ersten Ende der Reihe zu einem zweiten Ende (1,2) gezogen wird, nach zumindest einem der vorhergehenden Ansprüche 1 bis 9, **dadurch gekennzeichnet, dass**
eine Neigung des Teiles des Einlasskanales (53) auf der stromabwärtigen Seite des Drosselkörpers (41) steiler für den Einlasskanal (53), angeordnet an dem ersten Ende (1), als für denjenigen an dem zweiten Ende (2) ist.

11. Brennkraftmaschine vom Vertikaltyp nach Anspruch 10, **dadurch gekennzeichnet, dass** ein Paar von Einlassöffnungen für jeden Zylinder (11) vorgesehen ist.

12. Brennkraftmaschine vom Vertikaltyp nach Anspruch 10 oder 11, wobei ein Zylinderkopf (22) die Zylinder (11) von Seiten ihrer Verbrennungskammer abdeckt, wobei der Zylinderkopf (22) für jeden Zylinder mit einer Einlassöffnung gebildet ist, die sich zu der Verbrennungskammer (11 a) öffnet,
**dadurch gekennzeichnet, dass** obere Enden der rechten und linken Drosselventilwelle mit der Ventilwellen des obersten Drosselventiles (42) verbunden sind, das über ein Motorgehäuse vorspringt, für eine ineinandergreifende Bewegung durch eine Ineinandergreifvorrichtung (66), die über dem Motorgehäuse angeordnet ist, und die Neigung des Teiles des Einlasskanales auf der stromabwärtigen Seite des Drosselkörpers (41) für den auf einem niedrigerem Niveau angeordneten Einlasskanal (53) steiler ist, als für den auf einem oberen Niveau angeordneten Einlasskanal (53).

## Revendications

1. Moteur à combustion interne de type vertical (9) pour un moteur hors-bord comprenant ;
au moins deux cylindres (11), dans lesquels chaque cylindre (11) a associé un passage d'admission (53) et comprend une chambre de combustion (11a) ayant un orifice d'admission,
un corps d'étranglement (41) disposé sur une portion intermédiaire du passage d'admission (53), et
un injecteur (56) fixé au corps d'étranglement (41) pour injecter du carburant,
**caractérisé en ce que** le passage d'admission (53) est constitué d'un. tuyau d'admission (46) et disposé entre un silencieux (51) et l'orifice d'admission de la chambre de combustion (11a), et une distance entre l'injecteur (56) et l'orifice d'admission est plus longue pour le passage d'admission (53) situé sur un niveau inférieur que pour le passage d'admission (53) situé sur un niveau supérieur par rapport à l'axe vertical du moteur.

2. Moteur à combustion interne de type vertical selon la revendication 1, **caractérisé en ce que** la buse d'injecteur communique avec le passage d'admission (53) en aval d'une soupape d'étranglement (42) montée à l'intérieur du corps d'étranglement (41).

3. Moteur à combustion interne de type vertical selon la revendication 1, **caractérisé en ce qu'**une buse d'injecteur communique avec le passage d'admission (53) en amont d'une soupape d'étranglement (42) montée à l'intérieur du corps d'étranglement (41) et **en ce que** du carburant est injecté depuis l'injecteur (56) vers un intervalle formé entre la surface interne du corps d'étranglement (41) et la soupape d'étranglement (42).

4. Monteur à combustion interne de type vertical selon l'une des revendications 1, 2 ou 3, **caractérisé en ce que** le silencieux (51) et le tuyau d'admission (46) sont fabriqués en matière plastique.

5. Moteur à combustion interne de type vertical selon l'une des revendications précédentes 1 à 4, **caractérisé en ce qu'**un vilebrequin (10) est disposé verticalement et **en ce que** des tiges de soupape des soupapes d'étranglement (42) dans les corps de soupape (41) sont disposées verticalement.

6. Moteur à combustion interne de type vertical selon au moins l'une des revendications précédentes 1 à 5, **caractérisé en ce que** la partie du passage d'admission (53) du côté chambre de combustion s'étend de l'orifice d'admission vers l'extérieur où est formée une portion de passage en porte à faux (53a), et s'étend en outre de façon recourbée à partir de là vers l'intérieur où une portion de passage évidée (53b) est formée,
**en ce que** l'injecteur (56), dont la buse d'injection est raccordée à la portion, de passage évidée (53b), est disposé d'une manière générale le long de la paroi externe (48) d'un carter (47) et **en ce que** la buse d'injection est dirigée vers l'emplacement de la chambre de combustion (11a).

7. Moteur à combustion interne de type vertical selon la revendication 6, **caractérisé en ce que** le corps d'étranglement (41) est disposé vers la portion de passage évidée (53b) et **en ce que** l'injecteur (56) est fixé au corps d'étranglement (41).

8. Moteur à combustion interne de type vertical qui est un moteur en forme de V ayant un nombre multiple de cylindres (11) s'écartant d'une manière générale en forme de V le long du vilebrequin (10) selon la revendication 6 ou 7, **caractérisé en ce que** le passage d'admission (53) ayant :
la portion de passage en porte à faux (53a) s'étendant depuis l'orifice d'admission d'une chambre de combustion (11) vers l'extérieur,
la portion de passage évidée (53b) s'étendant de manière recourbée vers l'intérieur à partir de la portion de passage en porte à faux (53a) et disposée d'une manière générale le long d'une paroi cylindrique (49), et
une portion formant passage latéral (53c) disposée d'une manière générale le long de la paroi externe (48) d'un vilebrequin (47),
l'injecteur (56), dont la buse d'injection est raccordée à la portion de passage évidée (53b), est disposé d'une manière générale le long de la paroi externe (48) du vilebrequin (47) et la buse d'injection est dirigée vers l'emplacement de la chambre de combustion (11a).

9. Moteur à combustion interne de type vertical selon l'une des revendications 6, 7 ou 8, **caractérisé en ce que** le vilebrequin (10) est orienté selon une direction verticale.

10. Moteur à combustion interne de type vertical, dans lequel les cylindres (11) disposés en ligne sont refroidis avec de l'eau aspirée à partir d'une première extrémité de la ligne jusqu'à une deuxième extrémité (1, 2) selon au moins l'une des revendications précédentes 1 à 9, **caractérisé en ce qu'**une inclinaison partielle du passage d'admission (53) sur le côté aval du corps d'étranglement (41) est plus forte pour le passage d'admission (53) situé sur la première extrémité (1) que sur la deuxième extrémité (2).

11. Moteur à combustion interne de type vertical selon la revendication 10, **caractérisé en ce qu'**une paire d'orifices d'admission est prévue pour chaque cylindre (11).

12. Moteur à combustion interne de type vertical selon la revendication 10 ou 11, dans lequel une culasse de cylindre (22) recouvre les cylindres (11) depuis leur côté chambre de combustion, la culasse de cylindre (22) est formée pour chaque cylindre avec une ouverture d'orifice d'admission vers la chambre de combustion (11a),
**caractérisé en ce que** les extrémités supérieures des tiges de soupape d'étranglement droite et gauche sont mutuellement raccordées avec la tige de soupape de la soupape d'étranglement la plus haute (42) faisant saillie au-dessus d'un carter de moteur pour un mouvement à verrouillage réciproque par un mécanisme de verrouillage réciproque (66) disposé au-dessus du carter de moteur, et
l'inclinaison partielle du passage d'admission sur le côté aval du corps d'étranglement (41) est plus forte pour le passage d'admission (53) situé sur un niveau inférieur que pour le passage d'admission (53) situé sur un niveau supérieur.
